(19) Europäisches Patentamt / European Patent Office / Office européen des brevets

(11) **EP 4 665 050 A1**

(12) **EUROPEAN PATENT APPLICATION**
published in accordance with Art. 153(4) EPC

(43) Date of publication:
**17.12.2025 Bulletin 2025/51**

(21) Application number: **23920520.6**

(22) Date of filing: **10.02.2023**

(51) International Patent Classification (IPC):
**H04W 72/1268** (2023.01)

(52) Cooperative Patent Classification (CPC):
**H04W 72/1268**

(86) International application number:
**PCT/CN2023/075470**

(87) International publication number:
**WO 2024/164312 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
• **LI, Guorong**
 **Beijing 100022 (CN)**
• **YI, Su**
 **Beijing 100022 (CN)**
• **JIA, Meiyi**
 **Beijing 100022 (CN)**
• **WANG, Xin**
 **Beijing 100022 (CN)**

(74) Representative: **Haseltine Lake Kempner LLP**
**Cheapside House**
**138 Cheapside**
**London EC2V 6BJ (GB)**

(54) **UPLINK DATA TRANSMISSION AND UPLINK DATA RECEIVING APPARATUS AND METHOD**

(57) Embodiments of this disclosure provide an uplink data transmission apparatus, an uplink data reception apparatus and methods thereof. The method includes: determining a hybrid automatic repeat request (HARQ) process identifier(s) associated with one configured grant (CG) occasion in at least two configured grant occasions (CG occasions) in a periodicity of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion; and transmitting uplink data on the one configured grant occasion (CG occasion) according to determined hybrid automatic repeat request (HARQ) process identifier(s) associated with the one configured grant occasion (CG occasion). Hence, not satisfying quality of service (QoS) requirements due to delay of data transmission may be avoided, and data loss due to that data are unable to be retransmitted may also be avoided.

The terminal equipment determines hybrid automatic repeat request (HARQ) process identifier(s) associated with one configured grant (CG) occasion in at least two configured grant occasions (CG occasions) in a period of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion — 501

The terminal equipment transmits uplink data on the one configured grant occasion (CG occasion) according to determined hybrid automatic repeat request (HARQ) process identifier(s) associated with the one configured grant occasion (CG occasion) — 502

**Fig. 5**

**Description**

Technical Field

This disclosure relates to the field of communication technologies.

Background

In the standardization process of the 5th Generation Mobile Communication Technology (5G) under the 3rd Generation Partnership Project (3GPP), key issues, solutions and conclusions supporting advanced media services are being studied, such as high data rate low latency (HDRLL) services, extended reality (XR) services, and haptic/multi-modal communication services, etc.

For example, in the study of XR service, XR is a general term of different types of realities, and different application fields of XR include entertainment, healthcare, and education, etc.

Virtual reality (VR) is a rendered version of released visual and audio scenes. When an observer or user moves within the limits defined by an application, rendering aims to simulate the visual and auditory sensory stimuli of the real world as naturally as possible; augmented reality (AR) refers to providing users with additional information or artificially-generated items or content overlaid on their current environment; and mixed reality (MR) is an advanced form of AR, in which some virtual elements are inserted into physical scenarios to provide an illusion that these elements are part of a real scene.

Extended reality (XR) refers to all real and virtual environments and human-computer interactions generated by computer technologies and wearable devices, including representative forms such as AR, MR, VR, and mixed and intersecting fields.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

In the 3GPP standardization process, configured grants (CGs) are supported for uplink, with the use of CGs, a base station (gNB) may allocate uplink resources to a user equipment (UE). CG is a good feature for periodic and highly latency demanding services, and most services generated by XR applications satisfy these two criterions.

It was found by the inventors that due to that XR service(s) has a more complex service pattern, the new service pattern requires enhancement of legacy CG configuration and processes. Therefore, in a case where there are more than one CG transmission occasions in a periodicity of a configured grant (CG) configuration, how to transmit uplink data or ensure transmission delay of uplink data accurately is a problem needing to be solved.

In order to solve at least one of the above problems, embodiments of this disclosure provide an uplink data transmission apparatus, an uplink data reception apparatus and methods thereof.

According to one aspect of the embodiments of this disclosure, there is provided an uplink data transmission method, applicable to a terminal equipment, wherein the method includes:

determining hybrid automatic repeat request (HARQ) process identifier(s) associated with one configured grant (CG) occasion in at least two configured grant occasions (CG occasions) in a periodicity of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion; and transmitting uplink data on the one configured grant occasion (CG occasion) according to a determined hybrid automatic repeat request (HARQ) process identifier(s) associated with the one configured grant occasion (CG occasion).

According to another aspect of the embodiments of this disclosure, there is provided an uplink data reception method, applicable to a network device, wherein the method includes:

receiving uplink data transmitted on one configured grant occasion (CG occasion), wherein hybrid automatic repeat request (HARQ) process identifier(s) of the uplink data is(are) hybrid automatic repeat request (HARQ) process identifier(s) associated with the one configured grant (CG) occasion in at least two configured grant occasions (CG occasions) in a periodicity of a configured grant (CG) configuration, wherein the hybrid automatic repeat request (HARQ) process identifier(s) associated with the one configured grant (CG) occasion is(are) different from hybrid automatic repeat request (HARQ) process identifiers associated with other configured grant occasions (CG occasions) in the at least two configured grant occasions (CG occasions) than the one configured grant (CG) occasion.

According to a further aspect of the embodiments of this disclosure, there is provided an uplink data transmission apparatus, configured in a terminal equipment, the uplink data transmission apparatus including:

a determining unit configured to determine hybrid automatic repeat request (HARQ) process identifier(s) associated with one configured grant (CG) occasion in at least two configured grant occasions (CG occasions) in a periodicity of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion; and
a transmitting unit configured to transmit uplink data on the one configured grant occasion (CG occasion) according to determined hybrid automatic repeat request (HARQ) process identifier(s) associated with the one configured grant occasion (CG occasion).

According to still another aspect of the embodiments of this disclosure, there is provided an uplink data reception apparatus, applicable to a network device, the uplink data reception apparatus including:

a receiving unit configured to receive uplink data transmitted on one configured grant occasion (CG occasion), wherein hybrid automatic repeat request (HARQ) process identifier(s) of the uplink data is(are) hybrid automatic repeat request (HARQ) process identifier(s) associated with the one configured grant (CG) occasion in at least two configured grant occasions (CG occasions) in a periodicity of a configured grant (CG) configuration, wherein the hybrid automatic repeat request (HARQ) process identifier(s) associated with the one configured grant (CG) occasion is(are) different from hybrid automatic repeat request (HARQ) process identifiers associated with other configured grant occasions (CG occasions) in the at least two configured grant occasions (CG occasions) than the one configured grant (CG) occasion.

According to yet another aspect of the embodiments of this disclosure, there is provided a communication system, the communication system including:

a terminal equipment configured to determine hybrid automatic repeat request (HARQ) process identifier(s) associated with one configured grant (CG) occasion in at least two configured grant occasions (CG occasions) in a periodicity of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion,
wherein the terminal equipment transmits uplink data on the one configured grant occasion (CG occasion) according to determined hybrid automatic repeat request (HARQ) process identifier(s) associated with the one configured grant occasion (CG occasion); and
a network device configured to receive the uplink data.

An advantage of the embodiments of this disclosure exists in that the terminal equipment determines hybrid automatic repeat request (HARQ) process identifier(s) associated with one configured grant (CG) occasion in at least two configured grant occasions (CG occasions) in a periodicity of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion, and transmits uplink data on the one configured grant occasion (CG occasion) according to determined hybrid automatic repeat request (HARQ) process identifier(s) associated with the one configured grant occasion (CG occasion). Hence, in a case where there are more than one CG transmission occasions in a periodicity of a configured grant (CG) configuration, each CG transmission occasion is able to transmit data by using different HARQ process identifiers (using different HARQ processes). Hence, not satisfying quality of service (QoS) requirements of XR service due to delay of XR service data transmission may be avoided, and XR service data loss due to that the XR service data is unable to be retransmitted may also be avoided.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.

FIG. 1 is a schematic diagram of an application scenario of embodiments of this disclosure;
FIG. 2 is an exemplary diagram of a technical problem to be solved by the embodiments of this disclosure;
FIG. 3 is another schematic diagram of the technical problem to be solved by the embodiments of this disclosure;
FIG. 4 is a further schematic diagram of the technical problem to be solved by the embodiments of this disclosure;
FIG. 5 is a schematic diagram of an uplink data transmission method of the embodiments of this disclosure;
FIG. 6 is an exemplary diagram of determining HARQ process identifier(s) of the embodiments of this disclosure;
FIG. 7 is another exemplary diagram of determining HARQ process identifier(s) of the embodiments of this disclosure;
FIG. 8 is a further exemplary diagram of determining HARQ process identifier(s) of the embodiments of this disclosure;
FIG. 9 is still another exemplary diagram of determining HARQ process identifier(s) of the embodiments of this disclosure;
FIG. 10 is a schematic diagram of an uplink data transmission method of the embodiments of this disclosure;
FIG. 11 is a schematic diagram of an uplink data transmission apparatus of the embodiments of this disclosure;
FIG. 12 is a schematic diagram of an uplink data reception apparatus of the embodiments of this disclosure;
FIG. 13 is a schematic diagram of a structure of a network device of the embodiments of this disclosure; and
FIG. 14 is a schematic diagram of a terminal equipment of the embodiments of this disclosure.

Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a communication terminal supporting a sidelink, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment.

A scenario of the embodiments of this disclosure shall be described below by way of examples; however, this disclosure is not limited thereto.

Two types of configured grants are defined in 3GPP standards, which may also be referred to as configured uplink grants; however, this disclosure is not limited thereto.

CG type 1: radio resource control (RRC) directly provides a configured uplink grant (including periodicity);
CG Type 2: radio resource control (RRC) defines a periodicity of a configured uplink grant, and a physical downlink control channel (PDCCH) (or downlink control information) addressed to a configured scheduling (CS)-RNTI may notify and activate the configured uplink grant, or deactivate it, that is, the PDCCH (or DCI) addressed to the CS-RNTI indicates that the uplink grant may be implicitly reused according to the periodicity defined by RRC, until it is deactivated.

CG is a good feature for periodic and highly latency demanding services, and most services generated by XR applications satisfy these two criterions. For example, a size of CG resource is fixed, and correspondingly, a size of a traffic packet of XR is relatively fixed.

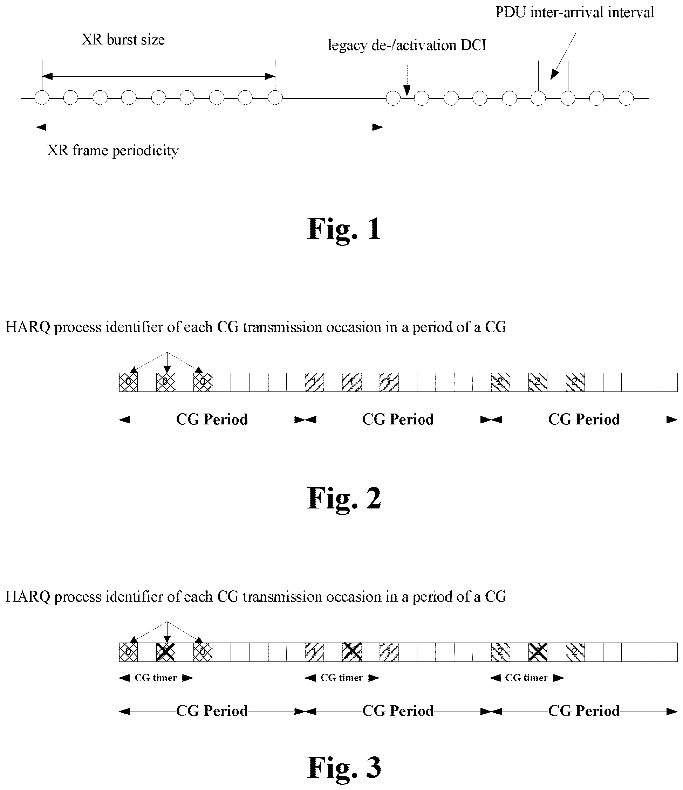

FIG. 1 is a schematic diagram of an application scenario of embodiments of this disclosure. As shown in FIG. 1, some XR services have more complex service patterns than CG design. For example, a video streaming service may include periodic protocol data unit bursts (PDU bursts) or PDU sets, rather than a single PDU. This new service pattern may require enhancement to legacy CG configurations and processes. For example, an XR burst size in FIG. 1 may contain more than one data packet, and if only one configured grant resource is used, the more than one data packet is unable to be transmitted; in addition, in an XR frame periodicity, there exists an arrival interval between different PDU packets (referred to as PDU internal arrival interval), as shown in FIG. 1. Currently, configuring CG resources with the arrival interval is not supported.

Therefore, it is agreed in the 3GPP standards to support more than one configured grant transmission occasion (CG PUSCH transmission occasions or CG transmission occasions or CG occasions or uplink transmission occasions, etc.) in a periodicity of a CG configuration (also referred to as one CG periodicity). In this case, more than one data packet in an XR burst or a PDU set may be transmitted on more than one configured grant transmission occasion in a periodicity of a CG configuration.

It was found by the inventors that in a case of supporting more than one CG PUSCH transmission occasion in a periodicity of a single CG configuration, assuming that different data may be transmitted in different CG PUSCH transmission occasions, how to determine a HARQ process identifier used by data in a CG PUSCH transmission occasion needs to be solved.

If a HARQ process identifier is calculated by using what is contained in Table 1 below in an existing standard, some problems will be brought.

Table 1

| |
|---|
| For configured uplink grants neither configured with *harq-ProcID-Offset2* nor with *cg-RetransmissionTimer,* the HARQ Process ID associated with the first symbol of a UL transmission is derived from the following equation:<br>HARQ Process ID = [floor(CURRENT_symbol/*periodicity*)] modulo *nrofHARQ-Processes*<br>For configured uplink grants with *harq-ProcID-Offset2,* the HARQ Process ID associated with the first symbol of a UL transmission is derived from the following equation:<br>HARQ Process ID = [floor(CURRENT_symbol / *periodicity*)] modulo *nrofHARQ-Processes* + *harq-ProcID-Offset2* |
| where CURRENT_symbol = (SFN $\times$ *numberOfSlotsPerFrame* $\times$ *numberOfSymbolsPerSlot* + slot number in the frame $\times$ *numberOfSymbolsPerSlot* + symbol number in the slot), and *numberOfSlotsPerFrame* and *numberOf-SymbolsPerSlot* refer to the number of consecutive slots per frame and the number of consecutive symbols per slot, respectively as specified in TS 38.211 [8]. |

Relevant parameters in Table 1 shall be described later in detail.

FIG. 2 is an exemplary diagram of a technical problem to be solved by the embodiments of this disclosure. As shown in FIG. 2, if a method for determining an HARQ process ID in an existing standard is still used, more than one CG PUSCH transmission occasion in a periodicity of a CG configuration will use an identical HARQ process ID. As shown in FIG. 2, a periodicity of a CG configuration (assumed as 10 symbols) includes 3 CG PUSCH transmission occasions (first, third and fifth symbols in a periodicity of each CG configuration), and HARQ process IDs used in each of the CG PUSCH transmission occasions in the figure are shown in FIG. 2.

FIG. 3 is an exemplary diagram of a technical problem to be solved by the embodiments of this disclosure. As shown in FIG. 3, if a value of a configured grant timer (configuredGrantTimer) is greater than an interval between CG PUSCH transmission occasions, in a periodicity of a CG configuration, when the second CG PUSCH transmission occasion arrives, the configured grant timer (configuredGrantTimer) is still running, that is, configurationGrantTimer to which an identical HARQ process (such as process 0) corresponds has not yet expired. Therefore, a resource (grant) of the second CG PUSCH transmission occasion using identical HARQ process is unable to be used for data transmission, resulting in delayed transmission of XR service data and possible not satisfying QoS requirements of XR services.

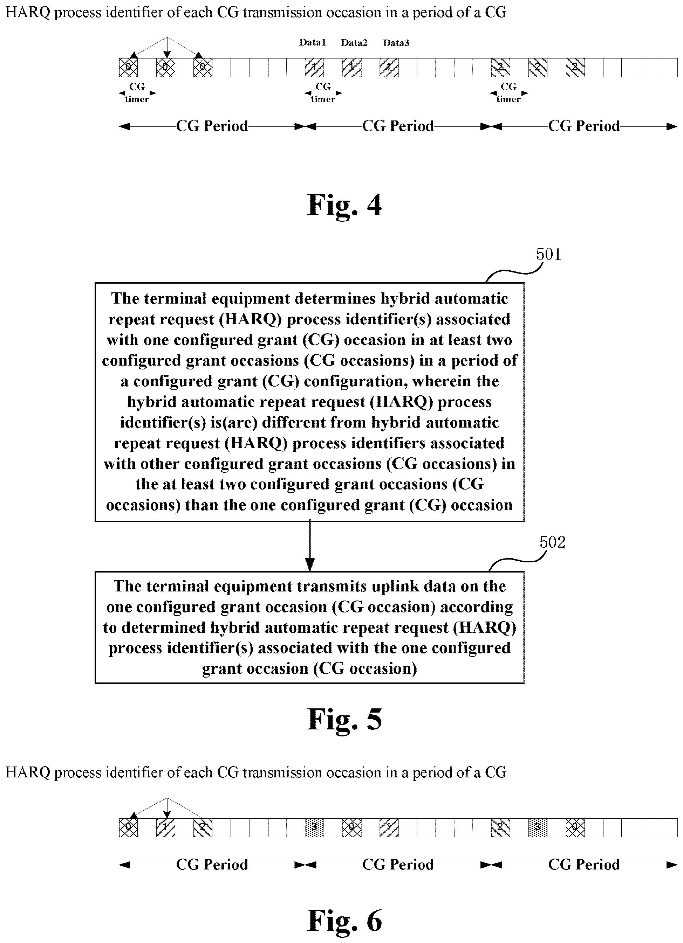

FIG. 4 is an exemplary diagram of a technical problem to be solved by the embodiments of this disclosure. As shown in FIG. 4, if the value of the configured grant timer (configuredGrantTimer) is not greater than a CG PUSCH transmission occasion, in a periodicity of a CG configuration, the second CG PUSCH transmission occasion transmits data by using an HARQ process identical that used by the first CG PUSCH transmission occasion, that is, the HARQ process will be used by new data (such as data 2). Therefore, data (data 1) to which the previous (first) CG PUSCH transmission occasion corresponds are unable to be retransmitted. If a network device has not received data 1 correctly, loss of data may be caused.

Hence, in a case where there are more than one CG transmission occasions in a periodicity of one configured grant (CG) configuration, how to determine an HARQ process with which a CG transmission occasion is associated to avoid delay of service data transmission or data loss is a problem needing to be solved.

In order to solve at least one of the above problems, embodiments of this disclosure provide an uplink data transmission apparatus, an uplink data reception apparatus and methods thereof.

Embodiments of a first aspect

The embodiments of this disclosure provide an uplink data transmission method.

FIG. 5 is a schematic diagram of the uplink data transmission method of the embodiments of this disclosure. As shown in FIG. 5, the method is applicable to a terminal equipment, and the method includes:

> 501: the terminal equipment determines hybrid automatic repeat request (HARQ) process identifier(s) associated with one configured grant (CG) occasion in at least two configured grant occasions (CG occasions) in a periodicity of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion; and
> 502: the terminal equipment transmits uplink data on the one configured grant occasion (CG occasion) according to determined hybrid automatic repeat request (HARQ) process identifier(s) associated with the one configured grant occasion (CG occasion).

Hence, in a case where there are more than one CG transmission occasions in a periodicity of a configured grant (CG) configuration, each CG transmission occasion is able to transmit data by using different HARQ process identifiers (using different HARQ processes). Hence, not satisfying quality of service (QoS) requirements due to delay of data transmission may be avoided, and data loss due to that data are unable to be retransmitted may also be avoided.

It should be noted that FIG. 5 only schematically illustrates the embodiments of this disclosure; however, this disclosure is not limited thereto. For example, an order of execution of the operations may be appropriately adjusted, and furthermore, some other operations may be added, or some operations therein may be reduced, and objects of the operations may be adjusted. And appropriate variants may be made by those skilled in the art according to the above contents, without being limited to what is contained in FIG. 5.

For example, reference may be made to the examples in FIG. 2 to FIG.3 for the case where a periodicity of a configured grant (CG) configuration includes at least two configured grant occasions, which shall not be repeated herein any further. For example, the expression "a CG transmission occasion" in this disclosure may be replaced with "a CG PUSCH transmission occasion", "a CG occasion", "a CG PUSCH occasion", and "a CG PUSCH transmission occasion", etc. The expression 'a periodicity of a configured grant (CG) configuration' in this disclosure may be replaced with 'a CG periodicity', 'a CG periodicity/periodicity', "a periodicity of CG Type 1', and "a periodicity of CG Type 2', etc. And the expression "CG" in this disclosure may also be replaced with " configured uplink grant"; however, this disclosure is not limited thereto.

For example, a CG configuration or a CG occasion described later in this disclosure uses (or "corresponds to" or "is configured with") x HARQ processes, which may be understood as using one of the x HARQ processes for one transmission on a CG occasion; however, this disclosure is not limited thereto.

In some embodiments, the CG configuration includes a first CG configuration and/or a second CG configuration, wherein the first CG configuration is a configuration not including a second offset (harq-ProcID-Offset2) and a second timer (cg-RetransmissionTimer), and the second CG configuration is a configuration including the second offset (harq-ProcID-Offset2).

For example, referring to Table 1, methods for calculating HARQ process identifiers to which two types of grants (two types of CG configurations) correspond are defined in the existing standards. The first CG configuration is: configured uplink grant(s) not configured with HARQ process identifier offset (harq-ProcID-Offset2) nor configured with " configured grant retransmission timer (cg-RetransmissionTimer)"; and the second CG configuration is: configured uplink grant(s) configured with HARQ process identifier offset (harq-ProcID-Offset2).

For example, the first CG configuration is used for one CG configuration, the second CG configuration is used for more than one CG configuration, and HARQ process identifiers to which configuration grants in different CG configurations correspond are distinguished by the HARQ process identifier offset (harq-ProcID-Offset2). In addition, reference may be made to existing standards for detailed contents of the "configured grant retransmission timer (cg-RetransmissionTimer)" and the "HARQ process identifier offset (harq-ProcID-Offset2)", etc., which are not limited in this disclosure.

For example, there are total 8 HARQ processes, and a value range of HARQ process identifier(s) is integers from 0 to 7. In case of the first CG configuration, if nrofHARQ-Processes configured for the CG is 4, the CG is configured with HARQ process with HARQ process identifiers of "0-3"; and in case of the second CG configuration, assuming that values of HARQ process identifier offsets (harq-ProcID-Offset2) configured for two CG configurations (ConfiguredGrantConfig) are "0" and "4" respectively and nrofHARQ-Processes configured for the two CG configurations are 4, the CG with the HARQ process identifier offset (harq-ProcID-Offset2) configured as "0" is configured with HARQ processes with HARQ process identifiers "0-3", and the CG with the HARQ process identifier offset (harq-ProcID-Offset2) configured as "4" is configured with HARQ processes with HARQ process identifiers "4-7". Optionally, the number of HARQ processes may be other numbers, such as 4 HARQ processes or 16 HARQ processes or 32 HARQ processes, etc., and corresponding HARQ process identifiers are 0~3 or 0~15 or 0~31, etc, which are not limited in this disclosure.

In some embodiments, the determining hybrid automatic repeat request (HARQ) process identifier(s) associated with one configured grant (CG) occasion in at least two configured grant occasions in a periodicity of a CG configuration includes: determining the hybrid automatic repeat request (HARQ) process identifier(s) associated with the one configured grant occasion (CG occasion) according to a first parameter and a second parameter; and/or determining the hybrid automatic repeat request (HARQ) process identifier(s) associated with the one configured grant occasion (CG occasion) according to a first offset or a third offset; and/or determining the hybrid automatic repeat request (HARQ) process identifier(s) associated with the one configured grant occasion (CG occasion) according to a third parameter; and/or determining hybrid automatic repeat request (HARQ) process identifier(s) associated with a first configured grant occasion (CG occasion) in a time domain in the periodicity of the configured grant (CG) configuration; and/or selecting hybrid automatic repeat request (HARQ) process identifier(s) associated with the one configured grant occasion (CG occasion) in the periodicity of the configured grant (CG) configuration.

In some embodiments, the terminal equipment further receives indication information transmitted by the network device, wherein the indication information indicates the second parameter, and/or, the first offset or the third offset, and/or, the third parameter. In some embodiments, the indication information is configured via a radio resource control (RRC) message or is carried by a physical downlink control channel (PDCCH) or downlink control information.

The determining HARQ process identifier(s) associated with one CG occasion in at least two CG occasions in a periodicity of a configured grant (CG) configuration shall be described below by way of examples.

The determining the HARQ process identifier(s) associated with one CG occasion according to the first parameter and second parameter shall be described below by way of examples.

In some embodiments, the first parameter is an index of the CG occasion in the periodicity of the configured grant (CG) configuration, for example, the CG occasion is an *i-th* CG occasion in the periodicity of the CG; where, i is an integer starting from 0; and the second parameter is the number (k) of CG occasions in the periodicity of the CG configuration.

In some embodiments, the determination of the HARQ process identifier(s) associated with one CG occasion according to the first parameter and the second parameter includes: determining the HARQ process identifier(s) associated with the one CG occasion according to the first parameter, the second parameter and a first formula, wherein the first formula includes:

the HARQ process identifier= [ [floor (CURRENT_symbol/periodicity)] * K + i ] modulo nrofHARQ-Processes, or

the HARQ process identifier= [ [floor (CURRENT_symbol/periodicity)] * K + i ] modulo nrofHARQ-Processes + harq-ProcID-Offset2;

where, floor denotes a floor rounding operation, modulo denotes a modulo operation, CURRENT_symbol denotes a symbol index of one CG occasion in the periodicity of the CG configuration, periodicity denotes the periodicity of the CG configuration, nrofHARQ-Processes denotes the number of HARQ processes that are able to be used by one CG configuration, harq-ProcID-Offset2 denotes the second offset, i denotes the first parameter, and K denotes the second parameter.

For example, for the first CG configuration (CG(s)not configured with harq-ProcID-Offset2 nor ccg-RetransmissionTimer), for the *i-th* CG PUSCH transmission occasion, HARQ process ID associated with a first symbol of uplink (UL) transmission is derived according to the following equation of the first formula:

the HARQ process identifier= [ [floor (CURRENT_symbol/periodicity)] * K + i ] modulo nrofHARQ-Processes;

and for the second CG configuration (CG(s) configured with harq-ProcID-Offset2), for the *i-th* CG PUSCH transmission occasion, the HARQ process ID associated with the first symbol of the uplink (UL) transmission is derived according to the following equation of the first formula:

the HARQ process identifier= [ [floor (CURRENT_symbol/periodicity)] * K + i ] modulo nrofHARQ-Processes + harq-ProcID-Offset2.

For example, floor denotes a floor rounding operation, modulo denotes a modulo operation, and CURRENT_symbol denotes a symbol index of one CG PUSCH transmission occasion or a first CG PUSCH transmission occasion in the periodicity of the CG configuration, which may be calculated according to the following formula:

CURRENT_symbol = (SFN $\times$ *numberOfSlotsPerFrame* $\times$ *numberOfSymbolsPerSlot* + (slot number in the frame) $\times$ *numberOfSymbolsPerSlot* + (symbol number in the slot));

where, "numberOfSlotsPerFrame" and "numberOfSymbolsPerSlot" refer to the number of consecutive slots per radio frame and the number of consecutive symbols per slot, "slot number in the frame" denotes a slot number of one CG PUSCH transmission occasion or a first CG PUSCH transmission occasion in the periodicity of the CG configuration, and "symbol number in the slot" denotes a symbol number of a first symbol of one CG PUSCH transmission occasion or a first CG PUSCH transmission occasion in the periodicity of the CG configuration in a slot.

For example, i may be an integer starting from 0, and K is the number of CG PUSCH transmission occasions in a periodicity of the CG configuration, which may be notified to the UE by the network, for example, it is configured via an RRC message or indicated via a PDCCH (such as a PDCCH of an active CG).

FIG. 6 is an exemplary diagram of determining HARQ process identifier(s) of the embodiments of this disclosure. As shown in FIG. 6, it shows a procedure where for the first CG configuration, in a case where there exist 3 CG PUSCH transmission occasions in a periodicity of a CG configuration and the CG configuration uses 4 HARQ processes, HARQ process identifier(s) is(are) determined for each CG PUSCH transmission occasion.

For example, for the first CG configuration, the "periodicity" is 10ms, K=3, and "nrofHARQ-Processes"=4. For a first periodicity of the CG, assuming that a value of "CURRENT_symbol" is "0" and a value of "i" starts from "0", for a *0-th* CG PUSCH transmission occasion of the first periodicity of the CG, "HARQ process identifier=0" is calculated according to the first formula. For a second periodicity of the CG, assuming that a value of "CURRENT_symbol" is 11, for a *0-th* CG PUSCH transmission occasion of the second periodicity of the CG, "HARQ process identifier=3" is calculated according to the first formula.

For the second CG configuration, for example, for a CG with "harq-ProcID-Offset2" configured as "0", HARQ process identifier(s) used by a CG occasion of the CG is(are) identical to the determined HARQ process identifier(s) shown in FIG. 6. For example, for CGs with "harq-ProcID-Offset2" configured as "4", HARQ process identifiers used by CG occasions of the CG is the determined HARQ process identifiers shown in FIG. 6 plus 4, which shall not be repeated herein any further.

Therefore, different CG PUSCH transmission occasions in a periodicity of a CG configuration use different HARQ processes to transmit data, thereby avoiding delay of data transmission and data loss due to that data are unable to be retransmitted.

The determining the HARQ process identifier(s) associated with one CG occasion according to the first offset or the third offset shall be described below by way of examples.

In some embodiments, the determining the HARQ process identifier(s) associated with one CG occasion according to the first offset or the third offset includes: setting the first offset or the third offset for the one CG occasion in the periodicity of the CG configuration; and/or setting the number of HARQ processes that are able to be used by the one CG occasion in the periodicity of the CG configuration.

In some embodiments, the determining the HARQ process identifier(s) associated with one CG occasion according to the first offset or the third offset further includes: determining the first offset or the third offset according to the index or an order of the one CG occasion in the periodicity of the CG configuration and/or the number of the HARQ processes that are able to be used by the one CG occasion in the periodicity of the CG configuration.

In some embodiments, the first offset value and/or the third offset value denote(s) offset(s) of HARQ process identifier(s) with which a CG occasion is associated.

The determining the HARQ process identifier(s) associated with one CG occasion according to the first offset shall be described below by way of examples.

In some embodiments, the determining the HARQ process identifier(s) associated with one CG occasion according to the first offset includes: determining the hybrid automatic repeat request (HARQ) process identifier(s) associated with the one configured grant occasion (CG occasion) according to the first offset and a second formula, wherein the second formula includes:

the HARQ process identifier = [floor(CURRENT_symbol/periodicity)] modulo nrofHARQ-Processes + offset3; or

the HARQ process identifier = [floor(CURRENT_symbol/periodicity)] modulo nrofHARQ-Processes + offset3+ harq-ProcID-Offset2;

where, floor denotes a floor rounding operation, modulo denotes a modulo operation, CURRENT_Symbol denotes a symbol index of a CG occasion in the periodicity of the CG configuration, periodicity denotes the periodicity of the CG configuration, nrofHARQ-Processes denotes the number of HARQ processes that are able to be used or configured by one CG occasion in the periodicity of the CG configuration, harq-ProcID-Offset2 denotes the second offset, and offset3 denotes an offset of HARQ process identifier(s) of one CG occasion in the periodicity of the CG configuration, i.e. the first offset.

For example, for the first CG configuration (CG(s) not configured with harq-ProcID-Offset2 nor cg-RetransmissionTimer), for one CG PUSCH transmission occasion, the HARQ process ID associated with the first symbol of the uplink (UL) transmission is obtained according to the following equation of the second formula:

the HARQ process identifier = [floor(CURRENT_symbol/periodicity)] modulo nrofHARQ-Processes + offset3;

and for the second CG configuration (CG(s) configured with harq-ProcID-Offset2), for one CG PUSCH transmission occasion, the HARQ process ID associated with the first symbol of the uplink (UL) transmission is obtained according to the following equation of the second formula:

the HARQ process identifier = [floor(CURRENT_symbol/periodicity)] modulo nrofHARQ-Processes + offset3+ harq-ProcID-Offset2.

For example, the first offset offset3 is an offset of HARQ process identifier(s) to which one CG PUSCH transmission occasion in a periodicity of a CG configuration corresponds, and nrofHARQ-Processes is the number of HARQ processes that one CG PUSCH transmission occasion in a periodicity of a CG configuration may use or may be configured.

For example, the index of the CG occasion is i, and values of "i" start from 0 or "1", which is not limited in this disclosure. For example, a correspondence between offset3, nrofHARQ-Processes and i may be as shown in the following table.

Table 2

| Index of CG transmission occasions | First offset (offset3) | nrofHARQ-Processes |
|---|---|---|
| 0 | 0 | 2 |
| 1 | 2 | 3 |
| 2 | 5 | 4 |

For example, Table 2 only shows exemplary configurations, and values of nrofHARQ-Processes may also be identical for different CG PUSCH transmission occasions in a periodicity of a CG configuration.

For another example, a correspondence between offset3, nrofHARQ-Processes and CG occasions may be set in an order of the CG occasions (i.e. index of the CG occasions are not explicitly present), which is as shown in the following table.

Table 2A

| | First offset (offset3) | nrofHARQ-Processes |
|---|---|---|
| First CG occasion in a periodicity of a CG configuration | 0 | 2 |
| Second CG occasion in a periodicity of a CG configuration | 2 | 3 |
| Third CG occasion in a periodicity of a CG configuration | 5 | 4 |

For example, the first offset value (offset3) and/or "nrofHARQ-Processes" may be configured by a network, such as carrying the above configuration information by RRC reconfiguration, RRC resume, RRC setup, and/or RRC re-establishment messages. For example, in at least one CG configuration configured by the network, at least one CG PUSCH transmission occasion in a periodicity of a CG may be configured, and each CG PUSCH transmission occasion in a periodicity of a CG may be configured. In addition, in a case where the network configures more than one CG configuration (ConfiguredGrantConfig), offset3 and/or "nrofHARQ-Processes" configured for an *i-th* CG occasion in one CG configuration may be identical to or different from offset3 and/or "nrofHARQ-Processes" configured for an *i-th* CG occasion in another CG configuration, which is not limited in this disclosure.

For example, the first offset (offset3) and/or "nrofHARQ-Processes" may be predefined, which is not limited in this disclosure. For example, in case of the second CG configuration, a correspondence between offset3, nrofHARQ-Processes, harq-ProcID-Offset2 and CG occasion index, CG configuration index may be as shown in Table 2B or Table 2C below.

Table 2B

| CG Configuration index | CG occasion index | Second offset (harq-ProcID-Offset2) | First offset (offset3) | nrofHARQ-Processes |
|---|---|---|---|---|
| 0 | 0 | 0 | 0 | 2 |
| 0 | 1 | 0 | 2 | 3 |
| 0 | 2 | 0 | 5 | 4 |
| 1 | 0 | 9 | 0 | 2 |
| 1 | 1 | 9 | 2 | 3 |
| 1 | 2 | 9 | 5 | 4 |

In Table 2B, offset3 configured for CG occasion index 0 of CG configuration index 0 is identical to offset3 configured for CG occasion index 0 of CG configuration index 1, and nrofHARQ-Processes thereof are also identical;

offset3 configured for CG occasion index 1 of CG configuration index 0 is identical to offset3 configured for CG occasion index 1 of CG configuration index 1, and nrofHARQ-Processes thereof are also identical; offset3 configured for CG occasion index 2 of CG configuration index 0 is identical to offset3 configured for CG occasion index 2 of CG configuration index 1, and nrofHARQ-Processes thereof are also identical; a second offset of CG configuration index 0 is configured as "0", and a second offset of CG configuration index 1 is configured as "9".

Table 2C

| CG Configuration index | CG occasion index | Second offset (harq-ProcID-Offset2) | First offset (offset3) | nrofHARQ-Processes |
|---|---|---|---|---|
| 0 | 0 | 0 | 0 | 2 |
| 0 | 1 | 0 | 2 | 3 |
| 0 | 2 | 0 | 5 | 4 |
| 1 | 0 | 9 | 0 | 2 |
| 1 | 1 | 9 | 2 | 2 |
| 1 | 2 | 9 | 4 | 1 |

In Table 2C, for different CG configurations (such as CG configuration index 0 and CG configuration index 1), offset3 and nrofHARQ-Processes configured for CG occasion index 0 are identical, offset3 configured for CG occasion index 1 are identical, and nrofHARQ-Processes configured therefor are different; offset3 configured for CG occasion index 2 are different, and nrofHARQ-Processes configured therefor are also different; a second offset of CG configuration index 0 is configured as "0", and a second offset of CG configuration index 1 is configured as "9".

Similar to the first formula, floor denotes a floor rounding operation, modulo denotes a modulo operation, CURRENT_Symbol denotes a symbol index of one CG PUSCH transmission occasion or a first CG PUSCH occasion in a periodicity of a CG configuration, which may be calculated according to the following formula:

CURRENT_symbol = (SFN $\times$ numberOfSlotsPerFrame $\times$ numberOfSymbolsPerSlot + (slot number in the frame) $\times$ numberOfSymbolsPerSlot + (symbol number in the slot));

where, "numberOfSlotsPerFrame" and "numberOfSymbolsPerSlot" refer to the number of consecutive slots per radio frame and the number of consecutive symbols per slot, "slot number in the frame" denotes a slot number of one CG PUSCH transmission occasion or a first CG PUSCH transmission occasion in the periodicity of the CG configuration, and "symbol number in the slot" denotes a symbol number of a first symbol of one CG PUSCH transmission occasion or a first CG PUSCH transmission occasion in the periodicity of the CG configuration in a slot.

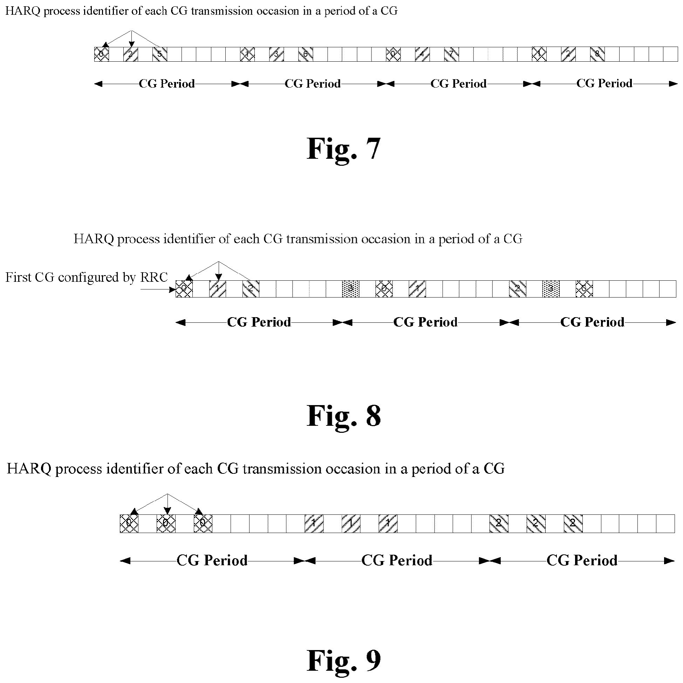

FIG. 7 is another exemplary diagram of determining HARQ process identifier(s) of the embodiments of this disclosure. As shown in FIG. 7, there are 3 CG PUSCH transmission occasions in a periodicity of a CG configuration. In the periodicity of the CG configuration, it can be seen from Table 2 or Table 2A that in each periodicity of a CG configuration, the first CG PUSCH transmission occasion (e.g. CG occasion index 0) uses or is configured with 2 HARQ processes, and offset3=0. According to the second formula, it may be obtained that a corresponding "HARQ process identifier=0" or "HARQ process identifier=1", which are present cyclically in different periodicities of the CG configuration. For example, that the first CG PUSCH transmission occasion uses or is configured with 2 HARQ processes includes transmitting data on the first CG PUSCH transmission occasion by using one of the two HARQ processes. For example, in a first periodicity of the CG shown in FIG. 7, first CG PUSCH transmission uses an HARQ process with an "HARQ process identifier=0", a second CG PUSCH transmission occasion uses or is configured with 3 HARQ processes, offset3=2, according to the second formula, it may be obtained that corresponding "HARQ process identifier=2" to "HARQ process identifier=4", which are present cyclically in different periodicities of the CG configuration; and a third CG PUSCH transmission occasion uses or is configured with 4 HARQ processes, offset3=5, according to the second formula, it may be obtained that corresponding "HARQ process identifier=5" to "HARQ process identifier=8", which are present cyclically in different periodicities of the CG configuration.

For the second CG configuration, for example, according to Table 2B, for the CG with "harq-ProcID-Offset2" configured as "0", the HARQ process identifier(s) used by the CG occasion of the CG is(are) identical to the determined HARQ process identifier(s) shown in FIG. 7. For example, for the CG with "harq-ProcID-Offset2" configured as "9", the HARQ process identifier(s) used by the CG occasion of the CG is(are) the determined HARQ process identifier(s) shown in FIG. 7 plus 9, which shall not be enumerated herein any further.

For the second CG configuration, for example, according to Table 2C, for the CG with "harq-ProcID-Offset2" configured as "0", the HARQ process identifier(s) used by the CG occasion of the CG is(are) identical to the determined HARQ process identifier(s) shown in FIG. 7. For example, for a CG with "harq-ProcID-Offset2" configured as "9", HARQ process identifiers used by the CG occasion index 0 of the CG are 9 and 10, HARQ process identifiers used by the CG occasion index 1 are 11 and 12, and an HARQ process identifier used by the CG occasion index 2 is 13.

For example, a corresponding table in the standards is shown below:

Table 3

| an HARQ process is configured for a configured grant PUSCH transmission occasion where *offset3* is configured of a configured uplink grant where neither *harq-ProcID-Offset* nor *harq-ProcID-Offset2* is configured, if the configured uplink grant is activated and the associated HARQ process ID is greater than or equal to *offset3* and less than sum of *offset3* and *nrofHARQ-Processes* for the configured grant PUSCH transmission occasion of the configured grant configuration. |
| --- |

Or is shown in Table 3A

Table 3A

| an HARQ process is configured for a configured grant PUSCH transmission occasion where *offset3* is configured of a configured uplink grant where *harq-ProcID-Offset2* is configured, if the configured uplink grant is activated and the associated HARQ process ID is greater than or equal to *harq-ProcID-Offset2* plus *offset3* and less than sum of *harq-ProcID-Offset2* for the configured grant configuration and *offset3* and *nrofHARQ-Processes* for the configured grant PUSCH transmission occasion. |
| --- |

Therefore, different CG PUSCH transmission occasions in a periodicity of a CG configuration transmit data by using different HARQ processes, thereby avoiding delay of data transmission and data loss due to that data are unable to be retransmitted.

The determining the HARQ process identifier(s) associated with one CG occasion according to the third offset shall be described below by way of examples.

In some embodiments, the determining the HARQ process identifier(s) associated with one CG occasion according to the third offset includes: determining the hybrid automatic repeat request (HARQ) process identifier(s) associated with the one configured grant occasion (CG occasion) according to the third offset and a third formula, wherein the third formula includes:

the hybrid automatic repeat request (HARQ) process identifier =[floor(CURRENT_symbol/periodicity)] modulo nrof-HARQ-Processes + offset4;

where, floor denotes a floor rounding operation, modulo denotes a modulo operation, CURRENT_Symbol denotes a symbol index of one CG occasion in the periodicity of the CG configuration, periodicity denotes the periodicity of the CG configuration, nrofHARQ-Processes denotes the number of HARQ processes that are able to be used or configured by an *i-th* CG occasion in the periodicity of the CG configuration, and offset4 denotes the third offset.

For example, the third offset (offset4)=the first offset (offset3)+the second offset (harq-ProcID-Offset2), and a value of 'i' starts from '0' or '1'.

Table 4

| CG Configuration index | CG occasion index | Third offset (offset4) | nrofHARQ-Processes |
| --- | --- | --- | --- |
| 0 | 0 | 0 | 2 |
| 0 | 1 | 2 | 3 |
| 0 | 2 | 5 | 4 |
| 1 | 0 | 9 | 3 |
| 1 | 1 | 12 | 2 |
| 1 | 2 | 14 | 1 |

For example, for CG occasion index 0 of CG configuration index 0, offset4 is configured as 0, and nrofHARQ-Processes is 2, hence, HARQ process identifiers that may be used by or configured for CG occasion index 0 of CG configuration index 0 are 0 and 1. For CG occasion index 1 of CG configuration index 0, offset 4 is configured as 2, and nrofHARQ-Processes is 3, hence, HARQ process identifiers that may be used by or configured for CG occasion index 1 of CG configuration index 0 are 2, 3 and 4. For CG occasion index 2 of CG configuration index 0, offset 4 is configured as 5, and nrofHARQ-Processes is 4, hence, HARQ process identifiers that may be used by or configured for CG occasion index 2 of CG configuration index 0 are 4, 6, 7 and 8. For CG occasion index 0 of CG configuration index 1, offset 4 is configured as 9, and nrofHARQ-Processes is 3, hence, HARQ process identifiers that may be used by or configured for CG occasion index 0 of CG configuration index 1 are 9, 10 and 11. For CG occasion index 1 of CG configuration index 1, offset 4 is configured as 12, and nrofHARQ-Processes is 2, hence, HARQ process identifiers that may be used by or configured for CG occasion index 0 of CG configuration index 1 are 12 and 13. For CG occasion index 2 of CG configuration index 1, offset 4 is configured as 14, and nrofHARQ-Processes is 1, hence, HARQ process identifier(s) that may be used by or configured for CG occasion index 2 of CG configuration index 1 is 14.

In some embodiments, for each CG PUSCH transmission occasion corresponding to each CG configuration in more than one CG configuration, one offset4 and/or nrofHARQ-Processes is/are configured, and/or, for each CG PUSCH transmission occasion corresponding to at least one CG configuration, one offset4 and/or nrofHARQ-Processes is/are configured, and/or, for each CG PUSCH transmission occasion corresponding to one CG configuration, one offset4 and/or nrofHARQ-Processes is/are configured, and/or, for at least one CG PUSCH transmission occasion corresponding to one CG configuration, one offset4 and/or nrofHARQ-Processes is/are configured; however, this disclosure is not limited thereto. Therefore, different CG PUSCH transmission occasions in a periodicity of a CG configuration transmit data by using different HARQ processes, thereby avoiding delay of data transmission and data loss due to that data are unable to be retransmitted.

The determining the HARQ process identifier(s) associated with one CG occasion according to the third parameter shall be described below by way of examples.

In some embodiments, the third parameter (Kn) is the number of CG occasions configured or used in an *n-th* periodicity of the CG, wherein the third parameter (Kn) is counted starting from a first CG occasion in a periodicity of the CG.

In some embodiments, the determining the HARQ process identifier(s) associated with one CG occasion according to the third parameter includes: determining the HARQ process identifier(s) associated with the one CG occasion according to a sum of at least two third parameters, and a fourth formula, wherein the fourth formula includes:

the HARQ process identifier = [sum (K1, K2,...KN) + i ] modulo nrofHARQ- Processes; or

the HARQ process identifier = [sum (K1, K2,...KN) + i ] modulo nrofHARQ- Processes + harq-ProcID-Offset2;

where, floor denotes a floor rounding operation, modulo denotes a modulo operation, CURRENT_Symbol denotes a symbol index of one CG occasion in the periodicity of the CG configuration, nrofHARQ-Processes denotes the number of HARQ processes that are able to be used by an *i-th* CG occasion in the periodicity of the CG configuration, and sum (K1, K2,...KN) denotes a sum of the at least two third parameters.

For example, for the first CG configuration (CG(s) not configured with harq-ProcID-Offset2 nor cg-RetransmissionTimer), for the *i-th* CG PUSCH transmission occasion, an HARQ process ID associated with a first symbol of uplink (UL) transmission is obtained according to the following equation of the fourth formula:

the HARQ process identifier = [sum (K1, K2,...KN) + i ] modulo nrofHARQ- Processes;

and for the second CG configuration (CG(s) configured with harq-ProcID-Offset2), for the *i-th* CG PUSCH transmission occasion, an HARQ process ID associated with a first symbol of uplink (UL) transmission is obtained according to the following equation of the fourth formula:

the HARQ process identifier = [sum (K1, K2,...KN) + i ] modulo nrofHARQ- Processes + harq-ProcID-Offset2.

In some embodiments, the hybrid automatic repeat request (HARQ) process identifier(s) associated with the one configured grant occasion (CG occasion) is(are) determined according to the third parameter when at least one of the following conditions is satisfied that: numbers of CG occasions configured in a periodicity of a CG configuration are different; or, unused CG occasions in a periodicity of a CG configuration is indicated to a network side.

For example, the above K1 to KN are configured by the network device, and corresponding values thereof may be identical or different; and the terminal equipment indicates to the network the number of the unused CG occasions in the periodicity of the CG configuration, hence, the network device determines specific values of the above K1 to KN.

For example, for the first CG configuration, counting starts from a first CG PUSCH transmission occasion (or CG or CG resource) of a CG configuration. For example, for a Type 1 CG, counting may start from a first CG configured by RRC, and for Type 2 CG, counting may start from a first CG after a PDCCH activating the CG configuration. Kn (1<=n<=N) denotes the number of CG PUSCH transmission occasions configured or used in an *n-th* periodicity of the CG.

FIG. 8 is a further exemplary diagram of determining HARQ process identifier(s) of the embodiments of this disclosure.

As shown in FIG. 8, it shows HARQ process identifier(s) determined for each 'CG PUSCH transmission occasion' for the first CG configuration in a case where there are 3 CG PUSCH transmission occasions in a periodicity of a CG configuration and the CG configuration uses 4 HARQ processes.

For example, for the first CG configuration, its periodicity is 10ms, and "nrofHARQ-Processes"=4, for the first periodicity to a third periodicity of the CG, K1=K2=K3=3, and values of "i" start from 0 or 1, for a first CG PUSCH transmission occasion of the first periodicity of the CG, sum(K1)=3, i=0 or 1, nrofHARQ-Processes=4, and 'HARQ process identifier=0' is calculated according to the fourth formula; for the first CG PUSCH transmission occasion of a second periodicity of the CG, sum(K1,K2)=6, i=0 or 1, nrofHARQ-Processes=4 , and 'HARQ process identifier=3' is calculated according to the fourth formula.

For the second CG configuration, for example, for a CG with "harq-ProcID-Offset2" configured as "0", HARQ process identifier(s) used by one CG occasion of the CG is(are) identical to the determined HARQ process identifier(s) shown in FIG. 8. For example, for a CG with "harq-ProcID-Offset2" configured as "4", HARQ process identifier(s) used by one CG occasion of the CG is(are) the determined HARQ process identifier(s) shown in FIG. 8 plus 4, which shall not be enumerated herein any further.

Therefore, different CG PUSCH transmission occasions in a periodicity of a CG configuration transmit data by using different HARQ processes, thereby avoiding delay of data transmission and data loss due to that data are unable to be retransmitted.

Determining HARQ process identifier(s) associated with a first CG occasion in the time domain in a periodicity of a CG configuration and/or selecting HARQ process identifier(s) associated with one CG occasion in a periodicity of a CG configuration shall be described below by way of examples.

In some embodiments, the determining HARQ process identifier(s) associated with a first CG occasion in the time domain in a periodicity of a CG configuration includes: determining the hybrid automatic repeat request (HARQ) process identifier(s) associated with the first CG occasion in the time domain in the periodicity of the CG configuration according to a fifth formula, wherein the fifth formula includes:

the HARQ process identifier = [ [floor (CURRENT_symbol/periodicity)]] modulo nrofHARQ-Processes, or

the HARQ process identifier = [ [floor (CURRENT_symbol/periodicity)]] modulo nrofHARQ-Processes + harq-ProcID-Offset2;

where, floor denotes a floor rounding operation, modulo denotes a modulo operation, CURRENT_Symbol denotes a symbol index of one CG occasion in the periodicity of the CG configuration, periodicity denotes the periodicity of the CG configuration, nrofHARQ-Processes denotes the number of HARQ processes that are able to be used by the first CG occasion in the periodicity of the CG configuration, and harq-ProcID-Offset2 denotes the second offset.

For example, reference may be to the enumerations in the first formula for specific meanings of the parameters in the fifth formula, which shall not be repeated herein any further.

In some embodiments, after determining the HARQ process identifier(s) associated with the first CG occasion in the time domain in the periodicity of the CG configuration according to the fifth formula, the terminal equipment may select HARQ process identifier(s) associated with one CG occasion in a periodicity of a CG configuration.

In some embodiments, the selected HARQ process identifier(s) satisfies(satisfy) at least one of the following conditions:

unused HARQ process identifier(s);
HARQ process identifier(s) different from the HARQ process identifier(s) obtained through calculation by using the fifth formula;
HARQ process identifier(s) different from HARQ process identifier(s) having been used by CG occasion(s) in the periodicity of the CG configuration;
HARQ process identifier(s) with corresponding first timer (configuredGrantTimer) that has expired; and
HARQ process identifier(s) able to be used for the one CG configuration.

In some embodiments, the terminal equipment transmits the selected HARQ process identifier(s) to the network device, for example, by carrying the selected HARQ process identifier(s) by UCI and transmitting the selected HARQ process identifier(s) to the network device via a PUCCH or a PUSCH.

FIG. 9 is still another exemplary diagram of determining HARQ process identifier(s) of the embodiments of this disclosure. As shown in FIG. 9, it shows a procedure of determining HARQ process identifier(s) for the first CG configuration for each 'CG PUSCH transmission occasion' in a case where there are 3 CG PUSCH transmission occasions in a periodicity of a CG configuration and the CG configuration uses 4 HARQ processes.

For example, for the first CG configuration, "periodicity" is 10ms, K=3, and "nrofHARQ-Processes"=4; for the first CG PUSCH transmission occasion of a first periodicity of the CG, assuming that a value of "CURRENT_Symbol" is 0,"HARQ process identifier=0" is calculated according to the fifth formula. For a second periodicity of the CG, assuming that the value of 'CURRENT_Symbol' is 11, for a first CG PUSCH transmission occasion of the second periodicity of the CG, 'HARQ process identifier=1' is calculated according to the fifth formula. For a third periodicity of the CG, assuming that the value of "CURRENT_Symbol" is 21, for a first CG PUSCH transmission occasion of the third periodicity of the CG, "HARQ process identifier=2" is calculated according to the fifth formula. For example, within a periodicity of a CG, a second CG PUSCH transmission occasion may select HARQ process identifier(s) that is(are) different from HARQ process identifier(s) corresponding to the first CG PUSCH transmission occasion, such as selecting "HARQ process identifier=2". Likewise, the third CG PUSCH transmission occasion may select HARQ process identifier(s) that is(are) different from the HARQ process identifier(s) corresponding to the first and second CG PUSCH transmission occasions, such as selecting "HARQ process identifier=3". In addition, HARQ process identifiers of CG PUSCH transmission occasions in a second and third periodicities of the CG may be similarly selected, which shall not be repeated herein any further.

For the second CG configuration, for example, for a CG with "harq-ProcID-Offset2" configured as "0", HARQ process identifier(s) used by a CG occasion of the CG is identical to the determined HARQ process identifier(s) shown in FIG. 9. For example, for a CG with "harq-ProcID-Offset2" configured as "4", HARQ process identifier(s) used by a CG occasion of the CG is the determined HARQ process identifier(s) shown in FIG. 7 plus 9, which shall not be repeated herein any further. Therefore, different CG PUSCH transmission occasions in a periodicity of a CG configuration use different HARQ processes to transmit data, thereby avoiding delay of data transmission and data loss due to that data are unable to be retransmitted.

In some embodiments, for example, the "determining HARQ process identifier(s) associated with a first CG occasion in the time domain in a periodicity of a CG configuration" and the "selecting HARQ process identifier(s) associated with one CG occasion in a periodicity of a CG configuration" may be used jointly, such as the example shown in FIG. 9.

In some embodiments, the terminal equipment selects HARQ process identifier(s) associated with one CG occasion in a periodicity of a CG configuration.

In some embodiments, the selected HARQ process identifier(s) satisfies(satisfy) at least one of the following conditions:

unused HARQ process identifier(s);
HARQ process identifier(s) different from the HARQ process identifier(s) obtained through calculation by using the fifth formula;
HARQ process identifier(s) different from HARQ process identifier(s) having been used by a configured grant occasion (CG occasion) in the periodicity of the configured grant (CG) configuration;
HARQ process identifier(s) with corresponding first timer (configuredGrantTimer) that has expired; and
HARQ process identifier(s) able to be used for the one configured grant (CG) configuration.

In some embodiments, the terminal equipment transmits the selected HARQ process identifier(s) to the network device, for example, by carrying the selected HARQ process identifier(s) by UCI and transmitting the selected HARQ process identifier(s) to the network device via a PUCCH or a PUSCH.

For example, after selecting "HARQ process identifier(s) associated with a first CG occasion in a periodicity of a CG configuration", "HARQ process identifiers associated with other CG occasions in the periodicity of the CG configuration" are selected based on the above conditions. For another example, after selecting "HARQ process identifier(s) associated with any one CG occasion in a periodicity of a CG configuration", "HARQ process identifiers associated with other CG occasions in the periodicity of the CG configuration" are selected based on the above conditions, which shall not be enumerated herein any further.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It can be seen from the above embodiments that in a case where there are more than one CG transmission occasion in a periodicity of a configured grant (CG) configuration, each CG transmission occasion is able to transmit data by using different HARQ process identifiers (using different HARQ processes). Hence, not satisfying quality of service (QoS) requirements due to delay of data transmission may be avoided, and data loss due to that data are unable to be retransmitted may also be avoided.

Embodiments of a second aspect

The embodiments of this disclosure provide an uplink data reception method, applicable to a network device. The embodiments may be implemented in combination with the embodiments of the first aspect or may be implemented separately. Contents in the embodiments identical to those in the embodiments of the first aspect shall not be repeated herein any further.

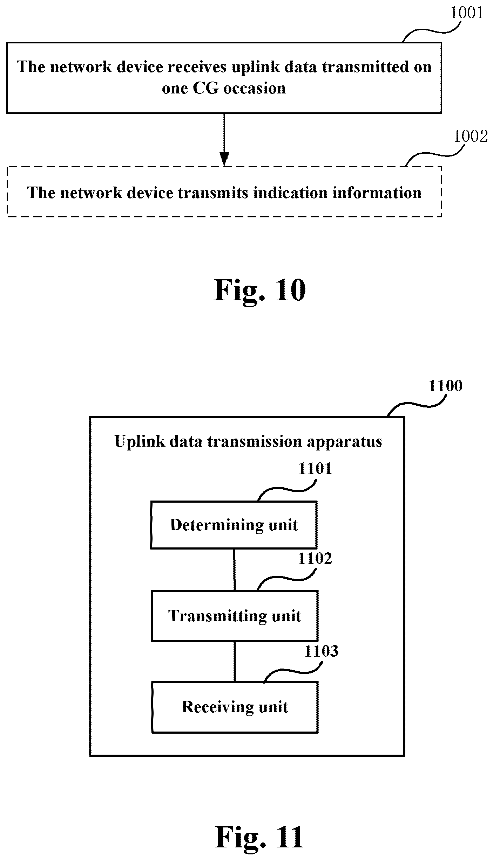

FIG. 10 is a schematic diagram of the uplink data reception method of the embodiments of this disclosure. As shown in FIG. 10, the method includes:

1001: the network device receives uplink data transmitted on one CG occasion,

wherein HARQ process identifier(s) of the uplink data is(are) HARQ process identifier(s) associated with the one CG occasion in at least two CG occasions in a periodicity of a CG configuration, wherein the HARQ process identifier(s) associated with the one CG occasion is(are) different from HARQ process identifiers associated with other CG occasions in the at least two CG occasions than the one CG occasion.

Hence, in a case where there are more than one CG transmission occasion in a periodicity of a configured grant (CG) configuration, each CG transmission occasion is able to transmit data by using different HARQ process identifiers (using different HARQ processes). Hence, not satisfying quality of service (QoS) requirements due to delay of data transmission may be avoided, and data loss due to that data are unable to be retransmitted may also be avoided.

It should be noted that FIG. 10 only schematically illustrates the embodiments of this disclosure; however, this disclosure is not limited thereto. For example, an order of execution of the operations may be appropriately adjusted, and furthermore, some other operations may be added, or some operations therein may be reduced, and objects of the operations may be adjusted. And appropriate variants may be made by those skilled in the art according to the above contents, without being limited to what is contained in FIG. 10.

In some embodiments, the method further includes:

1002: the network device transmits indication information, wherein the indication information indicates a second parameter, and/or, a first offset or a third offset, and/or, a third parameter.

In some embodiments, the indication information is configured by an RRC message or is carried by a PDCCH.

In some embodiments, the second parameter is the number (k) of CG occasions in the periodicity of the CG configuration, the first offset or third offset is set for the one CG occasion in a periodicity of a CG configuration, and the third parameter (Kn) is the number of CG occasions configured or used in an *n-th* periodicity of a CG configuration, wherein the third parameter(Kn) is counted starting from a first CG occasion in a periodicity of the CG.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It can be seen from the above embodiments that in a case where there are more than one CG transmission occasions in a periodicity of a configured grant (CG) configuration, each CG transmission occasion is able to transmit data by using different HARQ process identifiers (using different HARQ processes). Hence, not satisfying quality of service (QoS) requirements due to delay of data transmission may be avoided, and data loss due to that data are unable to be retransmitted may also be avoided.

Embodiments of a third aspect

The embodiments of this disclosure provide an uplink data transmission apparatus, configured in a terminal equipment. The apparatus may be, for example, a terminal equipment, or one or some components or assemblies configured in the terminal equipment; in addition, contents in the embodiments identical to those in the embodiments of the first aspect shall not be described herein any further.

FIG. 11 is a schematic diagram of the uplink data transmission apparatus of the embodiments of this disclosure. As shown in FIG. 11, the uplink data transmission apparatus 1100 includes:

a determining unit 1101 configured to determine hybrid automatic repeat request (HARQ) process identifier(s) associated with one configured grant (CG) occasion in at least two configured grant occasions (CG occasions) in a periodicity of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion; and

a transmitting unit configured to transmit uplink data on the one configured grant occasion (CG occasion) according to determined hybrid automatic repeat request (HARQ) process identifier(s) associated with the one configured grant occasion (CG occasion).

Hence, in a case where there are more than one CG transmission occasion in a periodicity of a configured grant (CG) configuration, each CG transmission occasion is able to transmit data by using different HARQ process identifiers (using different HARQ processes). Hence, not satisfying quality of service (QoS) requirements due to delay of data transmission may be avoided, and data loss due to that data are unable to be retransmitted may also be avoided.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It should be noted that the components or modules related to this disclosure are only described above. However, this disclosure is not limited thereto, and the uplink data transmission apparatus 1100 may further include other components or modules, and reference may be made to related techniques for particulars of these components or modules.

Furthermore, for the sake of simplicity, connection relationships between the components or modules or signal profiles thereof are only illustrated in FIG. 11. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

In some embodiments, the determining unit 1101 determines the hybrid automatic repeat request (HARQ) process identifier(s) associated with the one configured grant occasion (CG occasion) according to a first parameter and a second parameter, and/or determines the hybrid automatic repeat request (HARQ) process identifier(s) associated with the one configured grant occasion (CG occasion) according to a first offset or a third offset, and/or determines the hybrid automatic repeat request (HARQ) process identifier(s) associated with the one configured grant occasion (CG occasion) according to a third parameter, and/or determines hybrid automatic repeat request (HARQ) process identifier(s) associated with a first configured grant occasion (CG occasion) in a time domain in the periodicity of the configured grant (CG) configuration, and/or selects hybrid automatic repeat request (HARQ) process identifier(s) associated with the one configured grant occasion (CG occasion) in the periodicity of the configured grant (CG) configuration.

In some embodiments, the uplink data transmission apparatus 1100 further includes: a receiving unit 1103 configured to receive indication information transmitted by a network device, wherein the indication information indicates the second parameter, and/or, the first offset or the third offset, and/or, the third parameter.

In some embodiments, the indication information is configured via a radio resource control (RRC) message or is carried by a physical downlink control channel (PDCCH).

In some embodiments, the first parameter is an index of the configured grant occasion (CG occasion) in the periodicity of the configured grant (CG) configuration; where, i is an integer starting from 0; and the second parameter is the number (k) of configured grant occasions (CG occasions) in the periodicity of the configured grant (CG) configuration.

In some embodiments, the determining unit 1101 determines the hybrid automatic repeat request (HARQ) process identifier(s) associated with the one configured grant occasion (CG occasion) according to the first parameter, the second parameter and a first formula, wherein the first formula includes:

the hybrid automatic repeat request (HARQ) process identifier = [ [floor (CURRENT_symbol/periodicity)] *K+ i ] modulo nrofHARQ-Processes, or the hybrid automatic repeat request (HARQ) process identifier = [ [floor (CURRENT_symbol/periodicity)] * K + i ] modulo nrofHARQ-Processes + harq-ProcID-Offset2;

where, floor denotes a floor rounding operation, modulo denotes a modulo operation, CURRENT_symbol denotes a symbol index of one configured grant occasion (CG occasion) in the periodicity of the configured grant (CG) configuration, periodicity denotes the periodicity of the configured grant (CG) configuration, nrofHARQ-Processes denotes the number of hybrid automatic repeat request (HARQ) processes that are able to be used by one configured grant (CG) configuration, harq-ProcID-Offset2 denotes the second offset, i denotes the first parameter, and K denotes the second parameter.

In some embodiments, the determining unit 1101 sets the first offset or the third offset for the one configured grant occasion (CG occasion) in the periodicity of the configured grant (CG) configuration, and/or sets the number of hybrid automatic repeat request (HARQ) processes that are able to be used by the one configured grant occasion (CG occasion) in the periodicity of the configured grant (CG) configuration.

In some embodiments, the determining unit 1101 determines the first offset or the third offset according to the index or an order of the one configured grant occasion (CG occasion) in the periodicity of the configured grant (CG) configuration and/or the number of the hybrid automatic repeat request (HARQ) processes that are able to be used by the one configured grant occasion (CG occasion) in the periodicity of the configured grant (CG) configuration.

In some embodiments, the determining unit 1101 determines the hybrid automatic repeat request (HARQ) process identifier(s) associated with the one configured grant occasion (CG occasion) according to the first offset and a second formula, wherein the second formula includes:

the hybrid automatic repeat request (HARQ) process identifier = [floor(CURRENT_symbol/periodicity)] modulo nrof-HARQ-Processes + offset3; or

the hybrid automatic repeat request (HARQ) process identifier = [floor(CURRENT_symbol/periodicity)] modulo nrof-HARQ-Processes + offset3+ harq-ProcID-Offset2;

where, floor denotes a floor rounding operation, modulo denotes a modulo operation, CURRENT_Symbol denotes a symbol index of one configured grant occasion (CG occasion) in the periodicity of the configured grant (CG) configuration, periodicity denotes the periodicity of the configured grant (CG) configuration, nrofHARQ-Processes denotes the number of hybrid automatic repeat request (HARQ) processes that are able to be used or configured by one configured grant occasion (CG occasion) in the periodicity of the configured grant (CG) configuration, harq-ProcID-Offset2 denotes the second offset, and offset3 denotes the first offset, which denotes an offset of hybrid automatic repeat request (HARQ) process identifier(s) of one configured grant occasion (CG occasion) in the periodicity of the configured grant (CG) configuration.

In some embodiments, the determining unit 1101 determines the hybrid automatic repeat request (HARQ) process identifier(s) associated with the one configured grant occasion (CG occasion) according to the third offset and a third formula, wherein the third formula includes:

the hybrid automatic repeat request (HARQ) process identifier = [floor(CURRENT_symbol/periodicity)] modulo nrof-HARQ-Processes + offset4;

where, floor denotes a floor rounding operation, modulo denotes a modulo operation, CURRENT_Symbol denotes a symbol index of one configured grant occasion (CG occasion) in the periodicity of the configured grant (CG) configuration, periodicity denotes the periodicity of the configured grant (CG) configuration, nrofHARQ-Processes denotes the number of hybrid automatic repeat request (HARQ) processes that are able to be used or configured by an *i-th* configured grant occasion (CG occasion) in the periodicity of the configured grant (CG) configuration, and offset4 denotes the third offset.

In some embodiments, the third parameter is the number of configured grant occasions (CG occasions) configured or used in an *n-th* periodicity of the configured grant (CG), wherein the third parameter is counted starting from a first configured grant occasion (CG occasion) in a periodicity of the configured grant (CG).

In some embodiments, the determining unit 1101 determines the hybrid automatic repeat request (HARQ) process identifier(s) associated with the one configured grant occasion (CG occasion) according to a sum of at least two third parameters, and a fourth formula, wherein the fourth formula includes:

the hybrid automatic repeat request (HARQ) process identifier = [sum (K1, K2,...KN) + i ] modulo nrofHARQ-Processes; or the hybrid automatic repeat request (HARQ) process identifier = [sum (K1, K2,...KN) + i ] modulo nrofHARQ-Processes + harq-ProcID-Offset2;

where, floor denotes a floor rounding operation, modulo denotes a modulo operation, CURRENT_Symbol denotes a symbol index of one configured grant occasion (CG occasion) in the periodicity of the configured grant (CG) configuration, nrofHARQ-Processes denotes the number of hybrid automatic repeat request (HARQ) processes that are able to be used by an *i-th* configured grant occasion (CG occasion) in the periodicity of the configured grant (CG) configuration, and sum (K1, K2,...KN) denotes a sum of the at least two third parameters.

In some embodiments, the determining unit 1101 determines the hybrid automatic repeat request (HARQ) process identifier(s) associated with the one configured grant occasion (CG occasion) according to the third parameter when at least one of the following conditions is satisfied that:

numbers of configured grant occasions (CG occasions) configured in a periodicity of a configured grant (CG) configuration are different; or
unused configured grant occasions (CG occasions) in a periodicity of a configured grant (CG) configuration are indicated to a network side.

In some embodiments, the determining unit 1101 determines the hybrid automatic repeat request (HARQ) process identifier(s) associated with the first configured grant occasion (CG occasion) in the time domain in the periodicity of the configured grant (CG) configuration according to a fifth formula, wherein the fifth formula includes:

the hybrid automatic repeat request (HARQ) process identifier = [ [floor (CURRENT_symbol/periodicity)]] modulo nrof-HARQ-Processes; or

the hybrid automatic repeat request (HARQ) process identifier = [ [floor (CURRENT_symbol/periodicity)]] modulo nrof-HARQ-Processes + harq-ProcID-Offset2;

where, floor denotes a floor rounding operation, modulo denotes a modulo operation, CURRENT_Symbol denotes a symbol index of one configured grant occasion (CG occasion) in the periodicity of the configured grant (CG) configuration, periodicity denotes the periodicity of the configured grant (CG) configuration, nrofHARQ-Processes denotes the number of hybrid automatic repeat request (HARQ) processes that are able to be used by the first configured grant occasion (CG occasion) in the periodicity of the configured grant (CG) configuration, harq-ProcID-Offset2 denotes the second offset.

In some embodiments, that the determining unit 1101 selects hybrid automatic repeat request (HARQ) process identifier(s) associated with the one configured grant occasion (CG occasion) in the periodicity of the configured grant (CG) configuration includes that: the selected hybrid automatic repeat request (HARQ) process identifier(s) satisfies(satisfy) at least one of the following conditions:

unused hybrid automatic repeat request (HARQ) process identifier(s);
hybrid automatic repeat request (HARQ) process identifier(s) different from the hybrid automatic repeat request (HARQ) process identifier(s) obtained through calculation by using the fifth formula;
hybrid automatic repeat request (HARQ) process identifier(s) different from hybrid automatic repeat request (HARQ) process identifier(s) having been used by a configured grant occasion (CG occasion) in the periodicity of the configured grant (CG) configuration;
hybrid automatic repeat request (HARQ) process identifier(s) with corresponding first timer (configuredGrantTimer) that has expired; and
hybrid automatic repeat request (HARQ) process identifier(s) able to be used for the one configured grant (CG) configuration.

In some embodiments, the transmitting unit 1102 carries the selected hybrid automatic repeat request (HARQ) process identifier(s) via uplink control information (UCI) and transmits the selected hybrid automatic repeat request (HARQ) process identifier(s) to the network device via a physical uplink control channel (PUCCH) or a physical uplink shared channel (PUSCH).

In some embodiments, the configured grant (CG) configuration includes a first configured grant (CG) configuration and/or a second configured grant (CG) configuration, wherein the first configured grant (CG) configuration is a configuration not including the second offset (harq-ProcID-Offset2) and a second timer (cg-repeatTimer), and the second configured grant (CG) configuration is a configuration including the second offset (harq-ProcID-Offset2).

It can be seen from the above embodiments that in a case where there are more than one CG transmission occasion in a periodicity of a configured grant (CG) configuration, each CG transmission occasion is able to transmit data by using different HARQ process identifiers (using different HARQ processes). Hence, not satisfying quality of service (QoS) requirements due to delay of data transmission may be avoided, and data loss due to that data are unable to be retransmitted may also be avoided.

Embodiments of a fourth aspect

The embodiments of this disclosure provide an uplink data reception apparatus, configured in a network device. The apparatus may be, for example, a network device, or one or some components or assemblies configured in the network device; in addition, contents in the embodiments identical to those in the embodiments of the first and second aspects shall not be described herein any further.

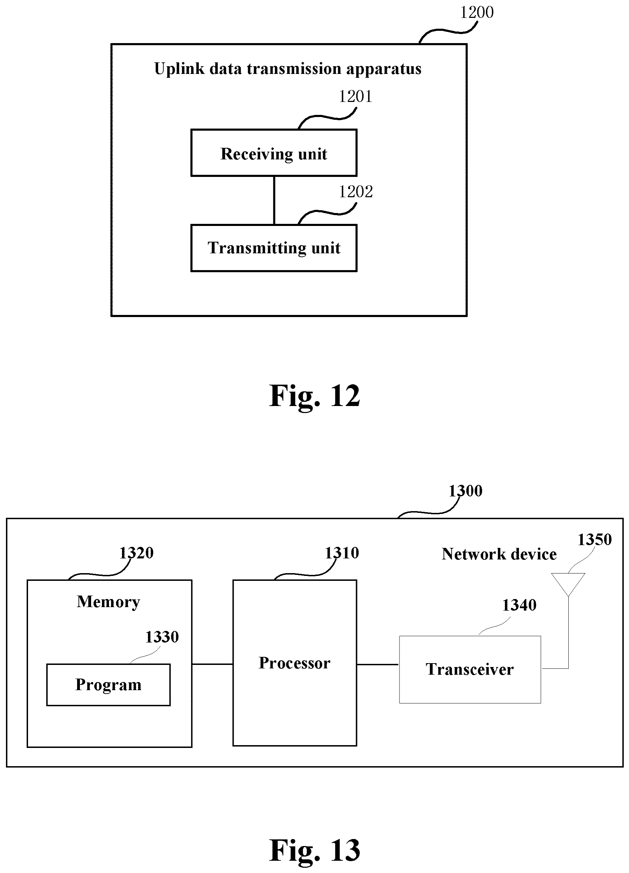

FIG. 12 is a schematic diagram of the uplink data reception apparatus of the embodiments of this disclosure. As shown in FIG. 12, the uplink data reception apparatus 1200 includes:

a receiving unit 1201 configured to receive uplink data transmitted on one configured grant occasion (CG occasion), wherein hybrid automatic repeat request (HARQ) process identifier(s) of the uplink data is hybrid automatic repeat request (HARQ) process identifier(s) associated with the one configured grant (CG) occasion in at least two configured grant occasions (CG occasions) in a periodicity of a configured grant (CG) configuration, wherein the hybrid automatic repeat request (HARQ) process identifier(s) associated with the one configured grant (CG) occasion is(are) different from hybrid automatic repeat request (HARQ) process identifiers associated with other configured grant occasions (CG occasions) in the at least two configured grant occasions (CG occasions) than the one configured grant (CG) occasion.

Hence, in a case where there are more than one CG transmission occasion in a periodicity of a configured grant (CG) configuration, each CG transmission occasion is able to transmit data by using different HARQ process identifiers (using different HARQ processes). Hence, not satisfying quality of service (QoS) requirements due to delay of data transmission may be avoided, and data loss due to that data are unable to be retransmitted may also be avoided.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It should be noted that the components or modules related to this disclosure are only described above. However, this disclosure is not limited thereto, and the uplink data reception apparatus 1200 may further include other components or modules, and reference may be made to related techniques for particulars of these components or modules.

Furthermore, for the sake of simplicity, connection relationships between the components or modules or signal profiles thereof are only illustrated in FIG. 11. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

In some embodiments, the uplink data reception apparatus 1200 further includes: a transmitting unit 1202 configured to transmit indication information, wherein the indication information indicates a second parameter, and/or, a first offset or a third offset, and/or, a third parameter.

In some embodiments, the indication information is configured by an RRC message or is carried by a PDCCH.

In some embodiments, the second parameter is the number (k) of CG occasions in the periodicity of the CG configuration, the first offset or third offset is set for one CG occasion in a periodicity of a CG configuration, and the third parameter (Kn) is the number of CG occasions configured or used in an *n-th* periodicity of a CG configuration, wherein the third parameter (Kn) is counted starting from a first CG occasion in a periodicity of the CG.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It can be seen from the above embodiments that in a case where there are more than one CG transmission occasion in a periodicity of a configured grant (CG) configuration, each CG transmission occasion is able to transmit data by using different HARQ process identifiers (using different HARQ processes). Hence, not satisfying quality of service (QoS) requirements due to delay of data transmission may be avoided, and data loss due to that data are unable to be retransmitted may also be avoided.

Embodiments of a fifth aspect

The embodiments of this disclosure provide a communication system, with contents identical to those in the embodiments of the first to the fourth aspects being not going to be described herein any further.

In some embodiments, the communication system may at least include:

a terminal equipment configured to determine hybrid automatic repeat request (HARQ) process identifier(s) associated with one configured grant (CG) occasion in at least two configured grant occasions (CG occasions) in a periodicity of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion,
wherein the terminal equipment transmits uplink data on the one configured grant occasion (CG occasion) according to determined hybrid automatic repeat request (HARQ) process identifier(s) associated with the one configured grant occasion (CG occasion); and
a network device configured to receive the uplink data.

The embodiments of this disclosure further provide a network device, which may be, for example, a base station. However, this disclosure is not limited thereto, and it may also be another network device.

FIG. 13 is a schematic diagram of a structure of the network device of the embodiments of this disclosure. As shown in FIG. 13, the network device 1300 may include a processor 1310 (such as a central processing unit (CPU)) and a memory 1320, the memory 1320 being coupled to the processor 1310. Wherein, the memory 1320 may store various data, and furthermore, it may store a program 1330 for information processing, and execute the program 1330 under control of the processor 1310.

Furthermore, as shown in FIG. 13, the network device 1300 may include a transceiver 1340, and an antenna 1350, etc. Wherein, functions of the above components are similar to those in the relevantr art, and shall not be described herein any further. It should be noted that the network device 1300 does not necessarily include all the parts shown in FIG. 13, and furthermore, the network device 1300 may include parts not shown in FIG. 13, and the relevantr art may be referred to.

The embodiments of this disclosure further provides a terminal equipment; however, this disclosure is not limited thereto, and it may also be another equipment.

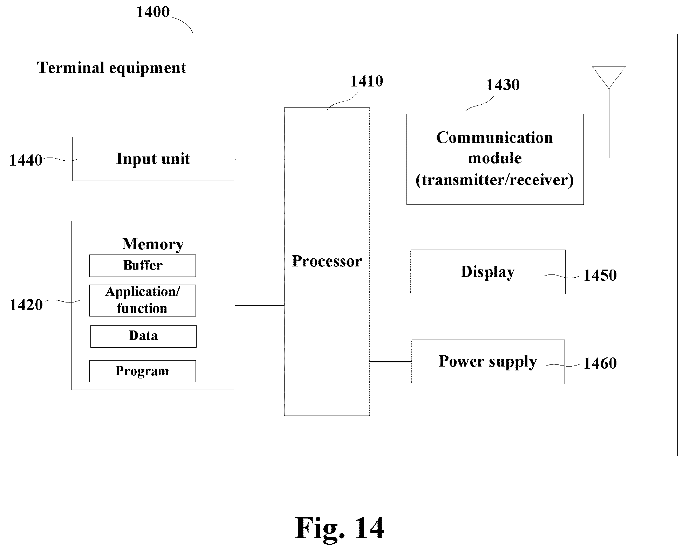

FIG. 14 is a schematic diagram of the terminal equipment of the embodiments of this disclosure. As shown in FIG. 14, the terminal equipment 1400 may include a processor 1410 and a memory 1420, the memory 1420 storing data and a program and being coupled to the processor 1410. It should be noted that this figure is illustrative only, and other types of structures may also be used, so as to supplement or replace this structure and achieve a telecommunications function or other functions.

For example, the processor 1410 may be configured to execute a program to carry out the uplink data transmission method as described in the embodiments of the first aspect. For example, the processor 1410 may be configured to execute the following control: determining HARQ process identifier(s) associated with one CG occasion in at least two CG occasions in a periodicity of a configured grant (CG) configuration, wherein the HARQ process identifier(s) is(are) different from HARQ process identifiers associated with other CG occasions in the at least two CG occasions than the one CG occasion; and transmitting uplink data at the one CG occasion according to determined HARQ process identifier(s) associated with the one CG occasion.

As shown in FIG. 14, the terminal equipment 1400 may further include a communication module 1430, an input unit 1440, a display 1450, and a power supply 1460; wherein functions of the above components are similar to those in the relevantr art, which shall not be described herein any further. It should be noted that the terminal equipment 1400 does not necessarily include all the parts shown in FIG. 14, and the above components are not necessary. Furthermore, the terminal equipment 1400 may include parts not shown in FIG. 14, and the relevant art may be referred to.

Embodiments of this disclosure provide a computer program, which, when executed in a terminal equipment, will cause the terminal equipment to carry out the uplink data transmission method as described in the embodiments of the first aspect.

Embodiments of this disclosure provide a computer medium, including a computer program, which will cause a terminal equipment to carry out the uplink data transmission method as described in the embodiments of the first aspect.

Embodiments of this disclosure provide a computer program, which, when executed in a terminal equipment, will cause the terminal equipment to carry out the uplink data reception method as described in the embodiments of the second aspect.

Embodiments of this disclosure provide a computer medium, including a computer program, which will cause a terminal equipment to carry out the uplink data reception method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile termination, and may also be stored in a memory card of a pluggable mobile termination. For example, if equipment (such as a mobile termination) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to embodiments containing the above embodiments, following supplements are further disclosed.

1. An uplink data transmission method, applicable to a terminal equipment, wherein the method includes:

determining HARQ process identifier(s) associated with one configured grant (CG) occasion in at least two configured grant occasions (CG occasions) in a periodicity of a configured grant (CG) configuration, wherein the HARQ process identifier(s) is(are) different from HARQ process identifiers associated with other configured grant occasions (CG occasions) in the at least two configured grant occasions (CG occasions) than the one configured grant (CG) occasion; and
transmitting uplink data on the one CG occasion according to determined HARQ process identifier(s) associated with the one CG occasion.

2. The method according to supplement 1, wherein the determining HARQ process identifier(s) associated with one CG occasion in at least two CG occasions includes:

determining the HARQ process identifier(s) associated with the one CG occasion according to a first parameter and a second parameter; and/or determining the HARQ process identifier(s) associated with the one CG occasion according to a first offset or a third offset; and/or
determining the HARQ process identifier(s) associated with the one CG occasion according to a third parameter; and/or
determining an HARQ process identifier(s) associated with a first CG occasion in a time domain in the periodicity of the CG configuration; and/or
selecting an HARQ process identifier(s) associated with the one CG occasion in the periodicity of the CG configuration.

3. The method according to supplement 2, wherein the method further includes:
receiving indication information transmitted by the network device, wherein the indication information indicates the second parameter, and/or, the first offset or the third offset, and/or, the third parameter.
4. The method according to supplement 3, wherein the method further includes:
configuring the indication information via an RRC message or carrying the indication information by a PDCCH.
5. The method according to supplement 3, wherein,

the first parameter is an index of the CG occasion in the periodicity of the CG configuration; where, i is an integer starting from 0;
and the second parameter is the number (k) of CG occasions in the periodicity of the CG configuration.

6. The method according to supplement 3 or 5, wherein the determining HARQ process identifier(s) associated with the one CG occasion according to the first parameter and the second parameter includes:

determining the HARQ process identifier(s) associated with the one CG occasion according to the first parameter, the second parameter and a first formula,
wherein the first formula includes:

the HARQ process identifier= [ [floor (CURRENT_symbol/periodicity)] *K+ i ] modulo nrofHARQ-Processes,

or

the HARQ process identifier= [[floor (CURRENT_symbol/periodicity)] *K+ i] modulo nrofHARQ-Processes + harq-ProcID-Offset2;

where, floor denotes a floor rounding operation, modulo denotes a modulo operation, CURRENT_symbol denotes a symbol index of one CG occasion in the periodicity of the CG configuration, periodicity denotes the periodicity of the CG configuration, nrofHARQ-Processes denotes the number of HARQ processes that are able to be used by a CG configuration, harq-ProcID-Offset2 denotes the second offset, i denotes the first parameter, and K denotes the second parameter.

7. The method according to supplement 3, wherein the determining HARQ process identifier(s) associated with the one CG occasion according to the first offset or a third offset includes:

setting the first offset or the third offset for the one CG occasion in the periodicity of the CG configuration; and/or setting the number of HARQ processes that are able to be used by the one CG occasion in the periodicity of the CG configuration.

8. The method according to supplement 7, wherein the determining HARQ process identifier(s) associated with the one CG occasion according to the first offset or a third offset further includes:
determining the first offset or the third offset according to the index or an order of the one CG occasion in the periodicity of the CG configuration and/or the number of the HARQ processes that are able to be used by the one CG occasion in the periodicity of the CG configuration.

9. The method according to supplement 8, wherein the determining HARQ process identifier(s) associated with the one CG occasion according to the first offset includes:

determining the HARQ process identifier(s) associated with the one CG occasion according to the first offset and a second formula,
wherein the second formula includes:

the HARQ process identifier =[floor(CURRENT_symbol/periodicity)] modulo nrofHARQ-Processes + offset3; or
the HARQ process identifier =[floor(CURRENT_symbol/periodicity)] modulo nrofHARQ-Processes + offset3+ harq-ProcID-Offset2;
where, floor denotes a floor rounding operation, modulo denotes a modulo operation, CURRENT_Symbol denotes a symbol index of one CG occasion in the periodicity of the CG configuration, periodicity denotes the periodicity of the CG configuration, nrofHARQ-Processes denotes the number of HARQ processes that are able to be used or configured by one CG occasion in the periodicity of the CG configuration, harq-ProcID-Offset2 denotes the second offset, and offset3 denotes the first offset, which denotes an offset of HARQ process identifier(s) of one CG occasion in the periodicity of the CG configuration.

10. The method according to supplement 7 or 8, wherein the determining HARQ process identifier(s) associated with the one CG occasion according to a third offset includes:

determining the HARQ process identifier(s) associated with the one CG occasion according to the third offset and a third formula,
wherein the third formula includes:

the HARQ process identifier =[floor(CURRENT_symbol/periodicity)] modulo nrofHARQ-Processes + offset4;
where, floor denotes a floor rounding operation, modulo denotes a modulo operation, CURRENT_Symbol denotes a symbol index of one CG occasion in the periodicity of the CG configuration, periodicity denotes the periodicity of the CG configuration, nrofHARQ-Processes denotes the number of HARQ processes that are able to be used or configured by an *i-th* CG occasion in the periodicity of the CG configuration, and offset4 denotes the third offset.

11. The method according to supplement 3, wherein,
the third parameter is the number of CG occasions configured or used in an *n-th* periodicity of the CG, wherein the third parameter is counted starting from a first CG occasion in a periodicity of the CG.
12. The method according to supplement 11, wherein the determining HARQ process identifier(s) associated with the one CG occasion according to a third parameter includes:

determining the HARQ process identifier(s) associated with the one CG occasion according to a sum of at least two third parameters, and a fourth formula,
wherein the fourth formula includes:

the HARQ process identifier = [sum (K1, K2,...KN) + i ] modulo nrofHARQ- Processes; or

the HARQ process identifier = [sum (K1, K2,...KN) + i ] modulo nrofHARQ- Processes + harq-ProcID-Offset2;

where, floor denotes a floor rounding operation, modulo denotes a modulo operation, CURRENT_Symbol denotes a symbol index of one CG occasion in the periodicity of the CG configuration, nrofHARQ-Processes denotes the number of HARQ processes that are able to be used by an *i-th* CG occasion in the periodicity of the CG configuration, and sum (K1, K2,...KN) denotes a sum of the at least two third parameters.

13. The method according to supplement 11, wherein the HARQ process identifier(s) associated with the one CG occasion is(are) determined according to the third parameter when at least one of the following conditions is satisfied that:

numbers of configured grant occasions (CG occasions) configured in a periodicity of a configured grant (CG) configuration are different; or
unused configured grant occasions (CG occasions) in a periodicity of a configured grant (CG) configuration are indicated to a network side.

14. The method according to supplement 3, wherein the determining HARQ process identifier(s) associated with the first CG occasion in the time domain in the periodicity of the CG configuration includes:

determining the HARQ process identifier(s) associated with the first CG occasion in the time domain in the periodicity of the CG configuration according to a fifth formula, wherein,
the fifth formula includes:

the HARQ process identifier = [ [floor (CURRENT_symbol/periodicity)]] modulo nrofHARQ-Processes; or

the HARQ process identifier = [ [floor (CURRENT_symbol/periodicity)]] modulo nrofHARQ-Processes + harq-ProcID-Offset2;

where, floor denotes a floor rounding operation, modulo denotes a modulo operation, CURRENT_Symbol denotes a symbol index of one CG occasion in the periodicity of the CG configuration, periodicity denotes the periodicity of the CG configuration, nrofHARQ-Processes denotes the number of HARQ processes that are able to be used by the first CG occasion in the periodicity of the CG configuration, and harq-ProcID-Offset2 denotes the second offset.

15. The method according to supplement 3 or 14, wherein the selecting HARQ process identifier(s) associated with the one CG occasion in the periodicity of the CG configuration includes that:
the selected HARQ process identifier(s) satisfies(satisfy) at least one of the following conditions:

unused HARQ process identifier(s);
HARQ process identifier(s) different from the HARQ process identifier(s) obtained through calculation by using the fifth formula;
HARQ process identifier(s) different from an HARQ process identifier(s) having been used by a CG occasion in the periodicity of the CG configuration;
HARQ process identifier(s) with corresponding first timer (configuredGrantTimer) that has expired; and
HARQ process identifier(s) able to be used for the one CG configuration.

16. The method according to supplement 15, wherein the method further includes:
carrying the selected HARQ process identifier(s) via UCI and transmitting the selected HARQ process identifier(s) to the network device via a PUCCH or a PUSCH.

17. The method according to supplement 1, wherein the CG configuration includes a first CG configuration and/or a second CG configuration,

wherein the first CG configuration is a configuration not including the second offset (harq-ProcID-Offset2) and a second timer (cg-repeatTimer);
and the second CG configuration is a configuration including the second offset (harq-ProcID-Offset2).

18. An uplink data reception method, applicable to a network device, wherein the method includes:

receiving uplink data transmitted on one CG occasion,
wherein HARQ process identifier(s) of the uplink data is HARQ process identifier(s) associated with the one CG occasion in at least two CG occasions in a periodicity of a CG configuration, wherein the HARQ process identifier(s) associated with the one CG occasion is(are) different from HARQ process identifiers associated with other CG occasions in the at least two CG occasions than the one CG occasion.

19. The method according to supplement 18, wherein the method further includes:
transmitting indication information, wherein the indication information indicates a second parameter, and/or, a first offset or a third offset, and/or, a third parameter.

20. The method according to supplement 19, wherein the method further includes:
configuring the indication information by an RRC message or transmitting the indication information via a PDCCH.

21. The method according to supplement 19, wherein,

the second parameter is the number (k) of CG occasions in the periodicity of the CG configuration,
the first offset or third offset is set for the one CG occasion in a periodicity of a CG configuration,
and the third parameter (Kn) is the number of CG occasions configured or used in an *n-th* periodicity of a CG configuration, wherein the third parameter is counted starting from a first CG occasion in a periodicity of the CG.

22. A terminal equipment, including a memory and a processor, the memory storing a computer program, and the processor being configured to execute the computer program to carry out the uplink data transmission method as described in any one of supplements 1-17.

23. A network device, including a memory and a processor, the memory storing a computer program, and the processor being configured to execute the computer program to carry out the uplink data transmission method as described in any one of supplements 18-22.

23. A communication system, including:

a terminal equipment configured to determine HARQ process identifier(s) associated with one CG occasion in at least two CG occasions in a periodicity of a CG configuration, wherein the HARQ process identifier(s) is(are) different from HARQ process identifiers associated with other CG occasions in the at least two CG occasions than the one CG occasion,
wherein the terminal equipment transmits uplink data on the one CG occasion according to determined HARQ process identifier(s) associated with the one CG occasion; and
a network device configured to receive the uplink data.

**Claims**

1. An uplink data transmission apparatus, configured in a terminal equipment, the uplink data transmission apparatus comprising:

a determining unit configured to determine hybrid automatic repeat request (HARQ) process identifier(s) associated with one configured grant (CG) occasion in at least two configured grant occasions (CG occasions) in a periodicity of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion; and
a transmitting unit configured to transmit uplink data on the one configured grant occasion (CG occasion) according to determined hybrid automatic repeat request (HARQ) process identifier(s) associated with the one configured grant occasion (CG occasion).

2. The apparatus according to claim 1, wherein the determining unit,

   determines the hybrid automatic repeat request (HARQ) process identifier(s) associated with the one configured grant occasion (CG occasion) according to a first parameter and a second parameter; and/or
   determines the hybrid automatic repeat request (HARQ) process identifier(s) associated with the one configured grant occasion (CG occasion) according to a first offset or a third offset; and/or
   determines the hybrid automatic repeat request (HARQ) process identifier(s) associated with the one configured grant occasion (CG occasion) according to a third parameter; and/or
   determines hybrid automatic repeat request (HARQ) process identifier(s) associated with a first configured grant occasion (CG occasion) in a time domain in the periodicity of the configured grant (CG) configuration; and/or
   selects hybrid automatic repeat request (HARQ) process identifier(s) associated with the one configured grant occasion (CG occasion) in the periodicity of the configured grant (CG) configuration.

3. The apparatus according to claim 2, wherein the uplink data transmission apparatus further comprises:

   a receiving unit configured to receive indication information transmitted by a network device,
   wherein the indication information indicates the second parameter, and/or, the first offset or the third offset, and/or, the third parameter.

4. The apparatus according to claim 3, wherein the indication information is configured via a radio resource control (RRC) message or is carried by a physical downlink control channel (PDCCH).

5. The apparatus according to claim 3, wherein,

   the first parameter is an index of the configured grant occasion (CG occasion) in the periodicity of the configured grant (CG) configuration; where, i is an integer starting from 0;
   and the second parameter is the number (k) of configured grant occasions (CG occasions) in the periodicity of the configured grant (CG) configuration.

6. The apparatus according to claim 5, wherein the determining unit determines the hybrid automatic repeat request (HARQ) process identifier(s) associated with the one configured grant occasion (CG occasion) according to the first parameter, the second parameter and a first formula,

   wherein the first formula comprises:

   the hybrid automatic repeat request (HARQ) process identifier = [ [floor (CURRENT_symbol/periodicity)] * K + i ] modulo nrofHARQ-Processes, or the hybrid automatic repeat request (HARQ) process identifier = [ [floor (CURRENT_symbol/periodicity)] * K + i ] modulo nrofHARQ-Processes + harq- ProcID-Offset2;

   where, floor denotes a floor rounding operation, modulo denotes a modulo operation, CURRENT_symbol denotes a symbol index of one configured grant occasion (CG occasion) in the periodicity of the configured grant (CG) configuration, periodicity denotes the periodicity of the configured grant (CG) configuration, nrof-HARQ-Processes denotes the number of hybrid automatic repeat request (HARQ) processes that are able to be used by one configured grant (CG) configuration, harq-ProcID-Offset2 denotes the second offset, i denotes the first parameter, and K denotes the second parameter.

7. The apparatus according to claim 5, wherein the determining unit,

   sets the first offset or the third offset for the one configured grant occasion (CG occasion) in the periodicity of the configured grant (CG) configuration; and/or
   sets the number of hybrid automatic repeat request (HARQ) processes that are able to be used by the one configured grant occasion (CG occasion) in the periodicity of the configured grant (CG) configuration.

8. The apparatus according to claim 7, wherein the determining unit determines the first offset or the third offset according to the index or an order of the one configured grant occasion (CG occasion) in the periodicity of the configured grant (CG) configuration and/or the number of the hybrid automatic repeat request (HARQ) processes that are able to be used by the one configured grant occasion (CG occasion) in the periodicity of the configured grant (CG) configuration.

9. The apparatus according to claim 8, wherein the determining unit determines the hybrid automatic repeat request (HARQ) process identifier(s) associated with the one configured grant occasion (CG occasion) according to the first offset and a second formula,

   wherein the second formula comprises:

   the hybrid automatic repeat request (HARQ) process identifier =[floor(CURRENT_symbol/periodicity)] modulo nrofHARQ-Processes + offset3; or the hybrid automatic repeat request (HARQ) process identifier =[floor(CURRENT_symbol/periodicity)] modulo nrofHARQ-Processes + offset3+ harq-ProcID-Offset2;

   where, floor denotes a floor rounding operation, modulo denotes a modulo operation, CURRENT_Symbol denotes a symbol index of one configured grant occasion (CG occasion) in the periodicity of the configured grant (CG) configuration, periodicity denotes the periodicity of the configured grant (CG) configuration, nrofHARQ-Processes denotes the number of hybrid automatic repeat request (HARQ) processes that are able to be used or configured by one configured grant occasion (CG occasion) in the periodicity of the configured grant (CG) configuration, harq-ProcID-Offset2 denotes the second offset, and offset3 denotes the first offset, which denotes an offset of a hybrid automatic repeat request (HARQ) process identifier(s) of one configured grant occasion (CG occasion) in the periodicity of the configured grant (CG) configuration.

10. The apparatus according to claim 8, wherein the determining unit determines the hybrid automatic repeat request (HARQ) process identifier(s) associated with the one configured grant occasion (CG occasion) according to the third offset and a third formula,

    wherein the third formula comprises:

    the hybrid automatic repeat request (HARQ) process identifier = [floor(CURRENT_symbol/periodicity)] modulo nrofHARQ-Processes + offset4;

    where, floor denotes a floor rounding operation, modulo denotes a modulo operation, CURRENT_Symbol denotes a symbol index of one configured grant occasion (CG occasion) in the periodicity of the configured grant (CG) configuration, periodicity denotes the periodicity of the configured grant (CG) configuration, nrofHARQ-Processes denotes the number of hybrid automatic repeat request (HARQ) processes that are able to be used or configured by an *i-th* configured grant occasion (CG occasion) in the periodicity of the configured grant (CG) configuration, and offset4 denotes the third offset.

11. The apparatus according to claim 3, wherein the third parameter is the number of configured grant occasions (CG occasions) configured or used in an *n-th* periodicity of the configured grant (CG), wherein the third parameter is counted starting from a first configured grant occasion (CG occasion) in a periodicity of the configured grant (CG).

12. The apparatus according to claim 11, wherein the determining unit determines the hybrid automatic repeat request (HARQ) process identifier(s) associated with the one configured grant occasion (CG occasion) according to a sum of at least two third parameters, and a fourth formula,

    wherein the fourth formula comprises:

    the hybrid automatic repeat request (HARQ) process identifier = [sum (K1, K2,...KN) + i ] modulo nrofHARQ-Processes; or the hybrid automatic repeat request (HARQ) process identifier = [sum (K1, K2,...KN) + i ] modulo nrofHARQ-Processes + harq-ProcID-Offset2;

where, floor denotes a floor rounding operation, modulo denotes a modulo operation, CURRENT_Symbol denotes a symbol index of one configured grant occasion (CG occasion) in the periodicity of the configured grant (CG) configuration, nrofHARQ-Processes denotes the number of hybrid automatic repeat request (HARQ) processes that are able to be used by an *i-th* configured grant occasion (CG occasion) in the periodicity of the configured grant (CG) configuration, and sum (K1, K2,...KN) denotes a sum of the at least two third parameters.

13. The apparatus according to claim 11, wherein the determining unit determines the hybrid automatic repeat request (HARQ) process identifier(s) associated with the one configured grant occasion (CG occasion) according to the third parameter when at least one of the following conditions is satisfied that:

numbers of configured grant occasions (CG occasions) configured in a periodicity of a configured grant (CG) configuration are different; or
unused configured grant occasions (CG occasions) in a periodicity of a configured grant (CG) configuration are indicated to a network side.

14. The apparatus according to claim 3, wherein the determining unit determines the hybrid automatic repeat request (HARQ) process identifier(s) associated with the first configured grant occasion (CG occasion) in the time domain in the periodicity of the configured grant (CG) configuration according to a fifth formula, wherein,

the fifth formula comprises:

the hybrid automatic repeat request (HARQ) process identifier = [ [floor (CURRENT_symbol/periodicity)]] modulo nrofHARQ-Processes; or the hybrid automatic repeat request (HARQ) process identifier = [ [floor (CURRENT_symbol/periodicity)]] modulo nrofHARQ-Processes + harq-ProcID- Offset2;

where, floor denotes a floor rounding operation, modulo denotes a modulo operation, CURRENT_Symbol denotes a symbol index of one configured grant occasion (CG occasion) in the periodicity of the configured grant (CG) configuration, periodicity denotes the periodicity of the configured grant (CG) configuration, nrofHARQ-Processes denotes the number of hybrid automatic repeat request (HARQ) processes that are able to be used by the first configured grant occasion (CG occasion) in the periodicity of the configured grant (CG) configuration, harq-ProcID-Offset2 denotes the second offset.

15. The apparatus according to claim 3, wherein that the determining unit selects a hybrid automatic repeat request (HARQ) process identifier(s) associated with the one configured grant occasion (CG occasion) in the periodicity of the configured grant (CG) configuration comprises that:
the selected hybrid automatic repeat request (HARQ) process identifier(s) satisfies(satisfy) at least one of the following conditions:

unused hybrid automatic repeat request (HARQ) process identifier(s);
hybrid automatic repeat request (HARQ) process identifier(s) different from the hybrid automatic repeat request (HARQ) process identifier(s) obtained through calculation by using the fifth formula;
hybrid automatic repeat request (HARQ) process identifier(s) different from hybrid automatic repeat request (HARQ) process identifier(s) having been used by a configured grant occasion (CG occasion) in the periodicity of the configured grant (CG) configuration;
hybrid automatic repeat request (HARQ) process identifier(s) with corresponding first timer (configuredGrantTimer) that has expired; and
hybrid automatic repeat request (HARQ) process identifier(s) able to be used for the one configured grant (CG) configuration.

16. The apparatus according to claim 15, wherein the transmitting unit carries the selected hybrid automatic repeat request (HARQ) process identifier(s) via uplink control information (UCI) and transmits the selected hybrid automatic repeat request (HARQ) process identifier(s) to the network device via a physical uplink control channel (PUCCH) or a physical uplink shared channel (PUSCH).

17. The apparatus according to claim 1, wherein the configured grant (CG) configuration comprises a first configured grant (CG) configuration and/or a second configured grant (CG) configuration,

   wherein the first configured grant (CG) configuration is a configuration not comprising the second offset (harq-ProcID-Offset2) and a second timer (cg-repeatTimer);
   and the second configured grant (CG) configuration is a configuration comprising the second offset (harq-ProcID-Offset2).

18. An uplink data reception apparatus, configured in a network device, the uplink data reception apparatus comprising:

   a receiving unit configured to receive uplink data transmitted on one configured grant occasion (CG occasion), wherein hybrid automatic repeat request (HARQ) process identifier(s) of the uplink data is(are) hybrid automatic repeat request (HARQ) process identifier(s) associated with the one configured grant (CG) occasion in at least two configured grant occasions (CG occasions) in a periodicity of a configured grant (CG) configuration, wherein the hybrid automatic repeat request (HARQ) process identifier(s) associated with the one configured grant (CG) occasion is(are) different from hybrid automatic repeat request (HARQ) process identifiers associated with other configured grant occasions (CG occasions) in the at least two configured grant occasions (CG occasions) than the one configured grant (CG) occasion.

19. The apparatus according to claim 18, wherein the apparatus further comprises:
   a transmitting unit configured to transmit indication information, wherein the indication information indicates a second parameter, and/or, a first offset or a third offset, and/or, a third parameter.

20. A communication system, comprising:

   a terminal equipment configured to determine hybrid automatic repeat request (HARQ) process identifier(s) associated with one configured grant (CG) occasion in at least two configured grant occasions (CG occasions) in a periodicity of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion,
   wherein the terminal equipment transmits uplink data on the one configured grant occasion (CG occasion) according to determined hybrid automatic repeat request (HARQ) process identifier(s) associated with the one configured grant occasion (CG occasion); and
   a network device configured to receive the uplink data.

XR burst size

PDU inter-arrival interval

legacy de-/activation DCI

XR frame periodicity

## Fig. 1

HARQ process identifier of each CG transmission occasion in a period of a CG

CG Period — CG Period — CG Period

## Fig. 2

HARQ process identifier of each CG transmission occasion in a period of a CG

CG timer — CG timer — CG timer

CG Period — CG Period — CG Period

## Fig. 3

HARQ process identifier of each CG transmission occasion in a period of a CG

## Fig. 4

The terminal equipment determines hybrid automatic repeat request (HARQ) process identifier(s) associated with one configured grant (CG) occasion in at least two configured grant occasions (CG occasions) in a period of a configured grant (CG) configuration, wherein the hybrid automatic repeat request (HARQ) process identifier(s) is(are) different from hybrid automatic repeat request (HARQ) process identifiers associated with other configured grant occasions (CG occasions) in the at least two configured grant occasions (CG occasions) than the one configured grant (CG) occasion

The terminal equipment transmits uplink data on the one configured grant occasion (CG occasion) according to determined hybrid automatic repeat request (HARQ) process identifier(s) associated with the one configured grant occasion (CG occasion)

## Fig. 5

HARQ process identifier of each CG transmission occasion in a period of a CG

## Fig. 6

HARQ process identifier of each CG transmission occasion in a period of a CG

CG Period — CG Period — CG Period — CG Period

## Fig. 7

HARQ process identifier of each CG transmission occasion in a period of a CG

First CG configured by RRC

CG Period — CG Period — CG Period

## Fig. 8

HARQ process identifier of each CG transmission occasion in a period of a CG

CG Period — CG Period — CG Period

## Fig. 9

1001

The network device receives uplink data transmitted on one CG occasion

1002

The network device transmits indication information

# Fig. 10

1100

Uplink data transmission apparatus

1101

Determining unit

1102

Transmitting unit

1103

Receiving unit

# Fig. 11

1200

Uplink data transmission apparatus

1201

Receiving unit

1202

Transmitting unit

# Fig. 12

1300

1350

Network device

1320

1310

Memory

1330

Processor

1340

Transceiver

Program

# Fig. 13

EP 4 665 050 A1

1400

Terminal equipment

1410
1430

1440 — Input unit

Communication
module
(transmitter/receiver)

Processor

Memory
Buffer
Application/
function
Data
Program

1420

Display — 1450

Power supply — 1460

Fig. 14

35

## INTERNATIONAL SEARCH REPORT

| | |
|---|---|
| International application No. | |
| **PCT/CN2023/075470** | |

### A. CLASSIFICATION OF SUBJECT MATTER

H04W72/1268(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, CNKI: 配置, 授权, 机会, HARQ, 进程, 标识, ID, 不同, configuration, grant, occasion, process, identify, different

### C. DOCUMENTS CONSIDERED TO BE RELEVANT

| Category* | Citation of document, with indication, where appropriate, of the relevant passages | Relevant to claim No. |
|---|---|---|
| X | WO 2023011272 A1 (DATANG MOBILE COMMUNICATIONS EQUIPMENT CO., LTD.) 09 February 2023 (2023-02-09) description, page 10, line 5-page 16, line 10, and figure 2 | 1-20 |
| X | WO 2022031102 A1 (LG ELECTRONICS INC.) 10 February 2022 (2022-02-10) description, paragraphs 0232-0289, and figures 11-12 | 1-20 |
| A | US 2021099257 A1 (QUALCOMM INC.) 01 April 2021 (2021-04-01) entire document | 1-20 |
| A | WO 2020164013 A1 (FUJITSU LTD.) 20 August 2020 (2020-08-20) entire document | 1-20 |
| A | WO 2022257052 A1 (GUANGDONG OPPO MOBILE COMMUNICATIONS CO., LTD.) 15 December 2022 (2022-12-15) entire document | 1-20 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 October 2023** | **13 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/075470**

| Patent document cited in search report | | | Publication date (day/month/year) | Patent family member(s) | | | Publication date (day/month/year) |
|---|---|---|---|---|---|---|---|
| WO | 2023011272 | A1 | 09 February 2023 | None | | | |
| WO | 2022031102 | A1 | 10 February 2022 | KR | 20230044220 | A | 03 April 2023 |
| US | 2021099257 | A1 | 01 April 2021 | EP | 4035293 | A1 | 03 August 2022 |
| | | | | WO | 2021062445 | A1 | 01 April 2021 |
| | | | | CN | 114424478 | A | 29 April 2022 |
| | | | | IN | 202227007719 | A | 01 July 2022 |
| WO | 2020164013 | A1 | 20 August 2020 | US | 2021345397 | A1 | 04 November 2021 |
| | | | | JP | 2022520046 | A | 28 March 2022 |
| | | | | CN | 113273115 | A | 17 August 2021 |
| WO | 2022257052 | A1 | 15 December 2022 | None | | | |

Form PCT/ISA/210 (patent family annex) (July 2022)